# EUROPEAN PATENT APPLICATION

(11) **EP 4 557 831 A1**
(43) Date of publication of application: **21.05.2025**
(21) Application number: 23851275.0
(22) Date of filing: 04.05.2023
(51) Int. Cl.: H04W 36/00, H04W 36/08

(54) **COMMUNICATION METHOD AND APPARATUS**

(30) Priority: 12.08.2022 CN 202210966168
(71) Applicant: Huawei Technologies Co., Ltd., Shenzhen, Guangdong 518129 (CN)
(72) Inventor: CHEN, Lei, Shenzhen, Guangdong 518129 (CN); LI, Bingzhao, Shenzhen, Guangdong 518129 (CN); LI, Ruijie, Shenzhen, Guangdong 518129 (CN); GUAN, Lei, Shenzhen, Guangdong 518129 (CN)
(74) Representative: Goddar, Heinz J.
(86) International application number: PCT/CN2023/092052
(87) International publication number: WO 2024/032045

(57) **Abstract**

A communication method and apparatus are provided. The method includes: A terminal device receives first indication information from a first cell, and performs cell selection or reselection based on the first indication information, where the terminal device camps on the first cell, and the first indication information indicates the terminal device to perform cell selection or reselection, so that a first terminal device accesses another cell, to reduce a quantity of terminal devices served by the first cell, and further reduce energy consumption of a communication system. Because the terminal device is indicated to perform cell selection or reselection, the terminal device can be enabled to perform normal communication.

## Description

### CROSS-REFERENCE TO RELATED APPLICATIONS

This application claims priority to Chinese Patent Application No. 202210966168.2, filed with the China National Intellectual Property Administration on August 12, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

When a terminal device accesses a cell, or normally operates in the accessed cell, a network device needs to provide some common information, for example, a synchronization signal and system information. To ensure, as much as possible, that the terminal device can normally operate in different cells, the network device periodically sends common information corresponding to each cell. Even if service load of a cell is low, the network device still periodically broadcasts common information corresponding to the cell. Consequently, energy consumption of the network device is higher, and energy consumption of a system is also higher. To reduce the energy consumption of the system, a frequency at which the network device sends the common information of the cell may be reduced. However, this affects the access of the terminal device to the cell, or affects the normal operation of the terminal device in the cell. How to enable, on a premise of reducing the energy consumption of the system, the terminal device to normally access the cell and normally operate in the accessed cell is an urgent problem to be resolved.

### SUMMARY

Embodiments of this application provide a communication method and apparatus, so that on a premise of reducing energy consumption of a system, a terminal device can normally access a cell, and normally operate in the accessed cell.

According to a first aspect, an embodiment of this application provides a communication method. The method may be performed by a communication apparatus. The communication apparatus may be a communication device or a communication apparatus, for example, a chip system, that can support a function needed by the communication device to implement the method. For example, the communication apparatus is a terminal device, a chip disposed in the terminal device, or another component configured to implement a function of the terminal device. In the following description process, an example in which the communication apparatus is the terminal device is used.

The communication method includes: The terminal device receives first indication information from a first cell, and performs cell selection or reselection based on the first indication information, where the terminal device camps on the first cell, and the first indication information indicates the terminal device to perform cell selection or reselection.

In this embodiment of this application, the terminal device is indicated by the first indication information from the first cell to perform cell selection or reselection. That is, a first network device that provides the first cell schedules the terminal device to perform cell selection or reselection. For example, when the first network device sends common information of the first cell at a lower frequency, or even the first network device does not send the common information of the first cell, the first network device may indicate the terminal device to perform cell selection or reselection. For the first network device, energy consumption can be reduced. For the terminal device, even if the first network device reduces the energy consumption, because the terminal device is indicated to perform cell selection or reselection, impact on normal cell access of the terminal device can be reduced.

In a possible implementation, the method further includes: The terminal device receives assistance information from the first cell, where the assistance information indicates at least one candidate cell, and the at least one candidate cell is for providing a camping service for the terminal device. In this way, the terminal device selects or reselects to one of the at least one candidate cell based on the first indication information and the assistance information. That is, the first network device that provides the first cell may provide the at least one candidate cell for the terminal device. In this way, when performing cell selection or reselection, the terminal device can select or reselect to the one of the at least one provided candidate cell. The terminal device does not need to perform blind cell measurement, so that energy consumption of the terminal device is reduced, and the terminal device can more quickly access a cell.

Optionally, the assistance information may include information about at least one frequency, and the terminal device may search for an appropriate cell on one of the at least one frequency. Alternatively, the assistance information may indicate at least one frequency and at least one cell corresponding to one or more of the at least one frequency, to indicate the terminal device to search the indicated cell on the frequency for an appropriate cell.

In a possible implementation, the first indication information is carried in a paging message, or the first indication information is carried on a physical downlink control channel for scheduling a paging message. In this manner, the terminal device can be enabled to learn, as soon as possible, that cell selection or reselection needs to be performed, thereby performing cell selection or reselection as soon as possible, to more quickly access the cell.

In a possible implementation, the assistance information is carried in a paging message, or the assistance information is carried in a broadcast message of the first cell. In this manner, the terminal device can be enabled to learn, as soon as possible, of a cell available for selection or reselection, to more quickly access to cell, so that energy consumption of the terminal device in a cell searching process is reduced.

According to a second aspect, an embodiment of this application provides a communication method. The method may be performed by a communication apparatus. The communication apparatus may be a communication device or a communication apparatus, for example, a chip system, that can support a function needed by the communication device to implement the method. For example, the communication apparatus is a network device, a chip disposed in the network device, or another component configured to implement a function of the network device. In the following description process, an example in which the communication apparatus is a first network device is used.

The communication method includes: The first network device determines first indication information, and sends the first indication information to a terminal device via a first cell, where the terminal device camps on the first cell of the first network device, and the first indication information indicates the terminal device to perform cell selection or reselection.

In a possible implementation, the method further includes: The first network device sends assistance information to the terminal device via the first cell, where the assistance information indicates at least one candidate cell, and the at least one candidate cell is for providing a camping service for the terminal device.

In a possible implementation, the first indication information is carried in a paging message, or the first indication information is carried on a physical downlink control channel for scheduling a paging message.

In a possible implementation, the assistance information is carried in a paging message, or the assistance information is carried in a broadcast message of the first cell.

For technical effects brought by the second aspect or the possible implementations, refer to the descriptions of the technical effects of the first aspect or the corresponding implementations.

According to a third aspect, an embodiment of this application provides a communication method. The method may be performed by a communication apparatus. The communication apparatus may be a communication device or a communication apparatus, for example, a chip system, that can support a function needed by the communication device to implement the method. For example, the communication apparatus is a terminal device, a chip disposed in the terminal device, or another component configured to implement a function of the terminal device. In the following description process, an example in which the communication apparatus is the terminal device is used.

The communication method includes: The terminal device receives first common information from a second cell, performs cell measurement based on the first common information, and determines a target cell based on a measurement result. Then, the terminal device initiates random access to the target cell. The terminal device camps on the second cell, the first common information includes system information of the second cell and configuration information of a first cell, and the target cell is the second cell or the first cell.

In this embodiment of this application, the terminal device receives the first common information from the second cell. The first common information further includes the configuration information of the first cell in addition to the system information of the second cell. In this way, based on the first common information, the terminal device can access both the second cell and the first cell. Because the second cell may provide the configuration information of the first cell for the terminal device, a first network device that provides the first cell may not send the configuration information of the first cell, to reduce energy consumption of the first network device. For the terminal device, when the first network device reduces the energy consumption, the terminal device can still access the first cell. That is, normal cell access of the terminal device is not affected.

In a possible implementation, the method further includes: Before the terminal device camps on the second cell, receiving, by the terminal device, notification information from the first cell, where the notification information indicates that system information of the first cell is changed. The terminal device receives updated system information from the first cell, where the updated system information includes a master information block (master information block, MIB), and does not include a system information block 1 (system information block 1, SIB1). The terminal device performs cell selection or reselection based on the updated system information.

In this embodiment of this application, the first network device that provides the first cell may send, to the terminal device, the system information that does not include the SIB1, and notify the terminal device that the system information of the first cell is changed. The terminal device receives the updated system information of the first cell, and may determine, based on that the updated system information does not include the SIB1, that the first cell cannot be camped on, so that the terminal device can determine to perform cell selection or reselection, for example, select or reselect to the second cell. In this manner, the system information to be sent by the first network device that provides the first cell carries less content, so that the energy consumption of the network device can be reduced. The terminal device may determine, based on the received system information, that the first cell cannot be camped on, and perform cell selection or reselection in time.

In a possible implementation, the method further includes: The terminal device receives second indication information from the first cell, where the second indication information indicates at least one candidate cell, and the at least one candidate cell is for providing a camping service for the terminal device. In this way, the terminal device determines, based on the updated system information and the second indication information, to select or reselect to one of the at least one candidate cell.

The first network device that provides the first cell may further provide the at least one candidate cell for the terminal device, so that when performing cell selection or reselection, the terminal device can select or reselect to the one of the at least one provided candidate cell, for example, the second cell. The terminal device does not need to perform blind cell measurement, to more quickly access a cell.

In a possible implementation, the method further includes: Before the terminal device receives the first common information, the terminal device receives notification information from the second cell, where the notification information indicates that the system information of the second cell is changed.

In a possible implementation, the configuration information of the first cell includes measurement configuration information, and that the terminal device performs cell measurement based on the first common information includes: The terminal device performs cell measurement based on measurement configuration information corresponding to a beam of the second cell.

In this embodiment of this application, the measurement configuration information in the configuration information of the first cell may be associated with a beam, and the terminal device only needs to perform cell measurement based on the measurement configuration information corresponding to the beam of the second cell, to reduce a quantity of to-be-measured cells and reduce energy consumption of the terminal device.

In a possible implementation, signal quality of the first cell is greater than or equal to signal quality of the second cell, and the target cell is the first cell; or signal quality of the first cell is greater than or equal to a first threshold, and the target cell is the first cell, where the first threshold is included in the configuration information of the first cell. A rule for determining the target cell is provided, and the terminal device may determine the to-be-accessed target cell according to the rule.

In a possible implementation, the first common information includes a first parameter, and the first parameter is for controlling a probability of accessing the second cell and a probability of accessing the first cell; and that the terminal device performs cell measurement based on the first common information, and determines a target cell based on a measurement result includes: The terminal device determines the target cell based on the first parameter, or the terminal device determines the target cell based on the first parameter and a first threshold, where the first threshold is included in the configuration information of the first cell.

Another rule for determining the target cell is provided, and the terminal device may also determine the to-be-accessed target cell according to the rule. For example, the first parameter indicates that a priority of the second cell is higher than a priority of the first cell, and the terminal device may determine that the target cell is the second cell. For another example, a measurement quantity of the second cell is greater than or equal to the first threshold, the first parameter indicates that a priority of the first cell is lower than a priority of the second cell, and the terminal device may determine that the target cell is the second cell. For another example, the first parameter may be a scale factor, the terminal device may generate a random number, the random number is greater than the scale factor, a measurement quantity of the second cell is greater than or equal to the first threshold, and the terminal device may determine that the target cell is the second cell.

According to a fourth aspect, an embodiment of this application provides a communication method. The method may be performed by a communication apparatus. The communication apparatus may be a communication device or a communication apparatus, for example, a chip system, that can support a function needed by the communication device to implement the method. For example, the communication apparatus is a network device, a chip disposed in the network device, or another component configured to implement a function of the network device. In the following description process, an example in which the communication apparatus is a second network device is used.

The communication method includes: The second network device determines first common information, and sends the first common information to a terminal device via a second cell, where the second cell is a cell served by the second network device, the terminal device camps on the second cell, and the first common information includes system information of the second cell and configuration information of a first cell.

In this embodiment of this application, in addition to sending the system information of the second cell, the second network device may further send the configuration information of the first cell. A network device that provides the first cell may send less configuration information of the first cell, or even not send the configuration information of the first cell, so that energy consumption of the network device is reduced. For the terminal device, although the network device that provides the first cell does not send the configuration information of the first cell, the terminal device may obtain the configuration information of the first cell from the second network device. Therefore, according to the method provided in this embodiment of this application, on a premise of reducing energy consumption of a system, the terminal device can normally access a cell, and normally operate in the accessed cell.

In a possible implementation, the first cell is a cell of a first network device, and the method further includes: The second network device receives the configuration information of the first cell from the first network device. That is, the second cell and the first cell belong to different network devices. In this case, the first network device may provide the configuration information of the first cell for the second network device in advance.

In a possible implementation, the method further includes: The second network device receives third indication information from a control node, where the third indication information includes one or more of the following configuration information: first mode indication information, a sending power of the second cell, a sending periodicity of the second cell, or first time information, where the first mode indication information indicates the second cell to use the one or more of the configuration information, and the first time information indicates start time for using the one or more of the configuration information by the second cell.

In this embodiment of this application, the control node may determine whether the second cell needs to use the one or more of the foregoing configuration information. If the second cell needs to use the one or more of the foregoing configuration information, it indicates that a system including the second network device can save more energy. It may also be considered that the third indication information may indicate the second network device to enter an energy-saving mode or operate in energy-saving mode. Therefore, the second network device may use one or more of the foregoing configurations based on an indication of the control node, to reduce the energy consumption of the system.

In a possible implementation, the method further includes: The second network device sends first information to the control node, where the first information indicates service load and/or energy consumption of the second network device within first duration. For example, the first information includes one or more of the following information: a quantity of terminal devices connected to the second network device within the first duration; a proportion of an average air interface resource or a maximum air interface resource used by the second network device within the first duration; average power consumption or accumulated power consumption of the second network device within the first duration; or energy efficiency of the second network device within the first duration or energy consumed by the second network device to send the system information within the first duration.

In this embodiment of this application, the second network device reports service load and/or energy consumption of the second network device within a period of time to the control node, so that the control node determines whether the second network device may enter the energy-saving mode.

According to a fifth aspect, an embodiment of this application provides a communication method. The method may be performed by a communication apparatus. The communication apparatus may be a communication device or a communication apparatus, for example, a chip system, that can support a function needed by the communication device to implement the method. For example, the communication apparatus is a network device, a chip disposed in the network device, or another component configured to implement a function of the network device. In the following description process, an example in which the communication apparatus is a first network device is used.

In this embodiment of this application, the first network device may determine whether to enter an energy-saving mode. If the first network device may enter the energy-saving mode, the first network device may send configuration information of a first cell to a second network device. Then, the first network device may not send the configuration information of the first cell, but the second network device sends the configuration information of the first cell to a terminal device. For a system, because energy consumption of the first network device is reduced, energy consumption of the system is also reduced. The terminal device may receive the configuration information of the first cell from the second network device, and normal access of the terminal device to the first cell is not affected.

In a possible implementation, the communication method further includes: The first network device sends notification information to the terminal device, and sends updated system information of the first cell to the terminal device, where the notification information indicates that system information of the first cell is changed; and the updated system information of the first cell includes a MIB, and does not include a SIB1.

If the updated system information of the first cell does not include the SIB1, it indicates that the first cell cannot be camped on. The first network device may indirectly indicate, by sending the system information that does not include the SIB1 to the terminal device, the terminal device to perform cell selection or reselection, so that the terminal device performs cell selection or reselection in time.

In a possible implementation, the method further includes: The first network device receives fourth indication information from a control node, where the fourth indication information includes one or more of the following configuration information: second mode indication information, a sending power of the first cell, a sending periodicity of the first cell, or second time information, where the second mode indication information indicates the first cell to use the one or more of the configuration information, and the second time information indicates start time for using the one or more of the configuration information by the first cell.

In this embodiment of this application, the control node may determine whether the first cell needs to use the one or more of the foregoing configuration information. If the first cell needs to use the one or more of the foregoing configuration information, it indicates that the system including the first network device can save more energy. It may also be considered that the fourth indication information may indicate the first network device to enter the energy-saving mode or operate in energy-saving mode. Therefore, the first network device may use one or more of the foregoing configurations based on an indication of the control node, to reduce the energy consumption of the system.

In a possible implementation, the updated system information of the first cell further includes identification information of a second cell of the second network device. The terminal device may determine, based on the updated system information, that the second cell can be camped on, so that the terminal device can more quickly access the second cell.

In a possible implementation, the method further includes: The first network device sends first information to the control node, where the first information indicates service load and/or energy consumption of the first network device within first duration. For example, the first information includes one or more of the following information: a quantity of terminal devices connected to the first network device within the first duration; a proportion of an average air interface resource or a maximum air interface resource used by the first network device within the first duration; average power consumption or accumulated power consumption of the first network device within the first duration; or energy efficiency of the first network device within the first duration or energy consumed by the first network device to send the system information within the first duration.

In this embodiment of this application, the first network device reports service load and/or energy consumption of the second network device within a period of time to the control node, so that the control node determines whether the first network device may enter the energy-saving mode.

According to a sixth aspect, an embodiment of this application provides a communication method. The method may be performed by a communication apparatus. The communication apparatus may be a communication device or a communication apparatus, for example, a chip system, that can support a function needed by the communication device to implement the method. For example, the communication apparatus is a network device, a chip disposed in the network device, or another component configured to implement a function of the network device. In the following description process, an example in which the communication apparatus is a first network device is used.

The communication method includes: The first network device receives fourth indication information from a control node, where the fourth indication information includes one or more of the following configuration information: second mode indication information, a sending power of a first cell, a sending periodicity of the first cell, or second time information, where the second mode indication information indicates the first cell to use the one or more of the configuration information, and the second time information indicates start time for using the one or more of the configuration information by the first cell.

The first network device determines, based on the fourth indication information, not to send common information of the first cell, or the first network device sends a signal of a second cell, where the second cell is a cell of a second network device.

In this embodiment of this application, the control node may indicate, via the fourth indication information, the first network device to reduce energy consumption. The first network device may determine, based on the fourth indication information, not to send the common information of the first cell, to reduce the energy consumption. Alternatively, the first network device sends a signal of the second network device based on the fourth indication information, to enhance coverage of the second network device.

In a possible implementation, the first network device may further send notification information and updated system information of the first cell to a terminal device, where the notification information indicates that system information of the first cell is changed; and the updated system information of the first cell includes a MIB, and does not include a SIB1.

In a possible implementation, the communication method further includes: The first network device sends first information to the control node, where the first information indicates service load and/or energy consumption of the first network device within first duration. For example, the first information includes one or more of the following information: a quantity of terminal devices connected to the first network device within the first duration; a proportion of an average air interface resource or a maximum air interface resource used by the first network device within the first duration; average power consumption or accumulated power consumption of the first network device within the first duration; or energy efficiency of the first network device within the first duration or energy consumed by the first network device to send the system information within the first duration.

According to a seventh aspect, an embodiment of this application provides a communication method. The method may be performed by a communication apparatus. The communication apparatus may be a communication device or a communication apparatus, for example, a chip system, that can support a function needed by the communication device to implement the method. For example, the communication apparatus is a control node, a chip disposed in the control node, or another component configured to implement a function of the control node. In the following description process, an example in which the communication apparatus is the control node is used.

The control node generates third indication information, and sends the third indication information to a second network device; and the control node generates fourth indication information, and sends the fourth indication information to a first network device, where the third indication information includes one or more of the following configuration information: first mode indication information, a sending power of a second cell, a sending periodicity of the second cell, or first time information, where the first mode indication information indicates the second cell to use the one or more of the configuration information, the first time information indicates start time for using the one or more of the configuration information by the second cell, and the second cell is a cell of the second network device; and the fourth indication information includes one or more of the following configuration information: second mode indication information, a sending power of a first cell, a sending periodicity of the first cell, or second time information, where the second mode indication information indicates the first cell to use the one or more of the configuration information, the second time information indicates start time for using the one or more of the configuration information by the first cell, and the first cell is a cell of the first network device.

In this embodiment of this application, the control node may determine whether the first network device and the second network device may save energy. When the control node determines that the first network device and the second network device may save the energy, the control node may configure some information for the second network device via the third indication information, so that the second network device uses these pieces of configuration information to save energy. Likewise, the control node configures some information for the first network device via the fourth indication information, so that the first network device uses these pieces of configuration information to save energy.

In a possible implementation, the method further includes: The control node receives first information from the first network device, and receives first information from the second network device, where the first information from the first network device indicates service load and/or energy consumption of the first network device within first duration, and the first information from the second network device indicates service load and/or energy consumption of the second network device within the first duration. When the service load and/or the energy consumption of the first network device within the first duration are/is less than a first threshold, and the service load and/or the energy consumption of the second network device within the first duration are/is less than a second threshold, the control node determines to send the third indication information to the second network device, and determines to send the fourth indication information to the first network device.

When the service load and/or the energy consumption of the first network device within the first duration are/is less than the first threshold, and the service load and/or the energy consumption of the second network device within the first duration are/is less than the second threshold, it indicates that service load and/or energy consumption of a current system are/is lower. Therefore, one network device may provide services that can be provided by a plurality of network devices. In this case, the control node may determine that the first network device and the second network device may save the energy.

According to an eighth aspect, an embodiment of this application provides a communication apparatus. The communication apparatus has a function of implementing behavior in the method embodiment of any one of the first aspect to the seventh aspect. For example, the communication apparatus may be the communication apparatus in any one of the first aspect to the seventh aspect, or the communication apparatus may be an apparatus, for example, a chip or a chip system, that can implement the method provided in any one of the first aspect to the seventh aspect. For beneficial effects, refer to the corresponding descriptions in the first aspect to the seventh aspect. Details are not described herein again.

In a possible design, the communication apparatus includes a corresponding means (means) or module configured to perform the method in any one of the first aspect to the seventh aspect. For example, the communication apparatus includes a processing unit (sometimes also referred to as a processing module or a processor) and/or a transceiver unit (sometimes also referred to as a transceiver module or a transceiver). The transceiver unit may include a sending unit and a receiving unit, or it may be understood as that the sending unit and the receiving unit are a same functional module. Alternatively, the transceiver unit is understood as a general term of a sending unit and a receiving unit, and the sending unit and the receiving unit may be different functional modules. These units (modules) may perform a corresponding function in the method example in any one of the first aspect to the seventh aspect. For details, refer to the detailed descriptions in the method example. Details are not described herein.

According to a ninth aspect, an embodiment of this application provides a communication apparatus. The communication apparatus may be the communication apparatus in the eighth aspect, or may be a chip or a chip system disposed in the communication apparatus in the eighth aspect. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the communication apparatus in the foregoing methods.

According to a tenth aspect, an embodiment of this application provides a communication apparatus. The communication apparatus includes an input/output interface and a logic circuit. The input/output interface is configured to input and/or output information. The logic circuit is configured to perform the method in any one of the first aspect to the seventh aspect.

According to an eleventh aspect, an embodiment of this application provides a chip system. The chip system includes a processor, may further include a communication interface, and is configured to implement the method in any one of the first aspect to the seventh aspect. In a possible implementation, the chip system further includes a memory, configured to store a computer program. The chip system may consist of a chip, or may include the chip and another discrete device.

According to a twelfth aspect, an embodiment of this application provides a communication system. The communication system includes a terminal device and a network device. The terminal device is configured to perform the method performed by the communication apparatus in the first aspect, and the network device is configured to perform the method performed by the communication apparatus in the first aspect. Alternatively, the terminal device is configured to perform the method performed by the communication apparatus in the third aspect, and the network device is configured to perform the method performed by the communication apparatus in the fourth aspect. Certainly, the communication system may include more terminal devices or more network devices, and may further include a control node.

According to a thirteenth aspect, this application provides a computer-readable storage medium. The computer-readable storage medium stores a computer program. When the computer program is run, the method in any one of the first aspect to the seventh aspect is implemented.

According to a fourteenth aspect, a computer program product is provided. The computer program product includes computer program code. When the computer program code is run, the method in any one of the first aspect to the seventh aspect is enabled to be performed.

For beneficial effects of the eighth aspect to the fourteenth aspect and the implementations thereof, refer to the descriptions of the beneficial effects of the first aspect to the seventh aspect and the implementations thereof.

### BRIEF DESCRIPTION OF DRAWINGS

FIG. 1 is a diagram of an architecture of a communication system to which an embodiment of this application is applicable;
FIG. 2 is a diagram of coverage areas of a plurality of network devices (for example, a gNB 0 to a gNB 6) according to an embodiment of this application;
FIG. 3 is a diagram of coverage areas of a plurality of network devices (for example, a gNB 0 to a gNB 6) according to an embodiment of this application;
FIG. 4 is a schematic flowchart of a first communication method according to an embodiment of this application;
FIG. 5 is a schematic flowchart of a second communication method according to an embodiment of this application;
FIG. 6 shows a procedure in which a terminal device performs cell selection or reselection when a plurality of network devices in a system are in energy-saving mode according to an embodiment of this application;
FIG. 7 is a diagram of coverage areas of a plurality of network devices (a gNB 0 to a gNB 6) and beams of the gNB 0 according to an embodiment of this application;
FIG. 8 is a diagram of a structure of a communication apparatus according to an embodiment of this application; and
FIG. 9 is a diagram of another structure of a communication apparatus according to an embodiment of this application.

### DESCRIPTION OF EMBODIMENTS

Technical solutions provided in embodiments of this application may be applied to a new radio (new radio, NR) system, a long term evolution (long term evolution, LTE) system, and a non-terrestrial network (non-terrestrial network, NTN) system, or may be applied to a next-generation mobile communication system or another similar communication system. The technical solutions provided in embodiments of this application may alternatively be applied to a vehicle to everything (vehicle to everything, V2X) system, an internet of things (internet of things, IoT) system, and the like.

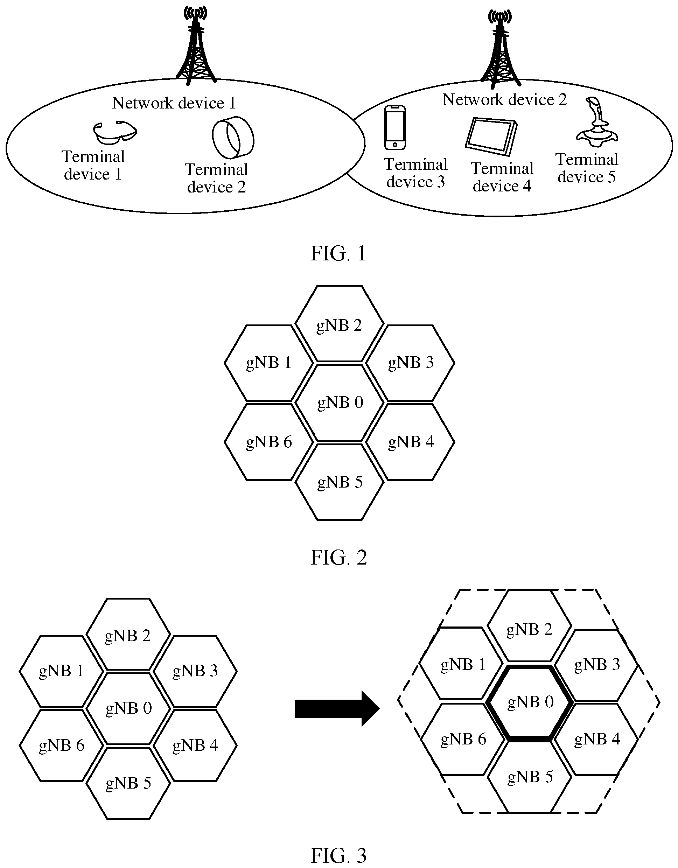

In an example, FIG. 1 is a diagram of a network architecture of a communication system to which an embodiment of this application is applicable. The communication system may include at least two network devices and at least one terminal device, and the at least one terminal device each can communicate with any network device. In FIG. 1, an example in which two network devices (namely, a network device 1 and a network device 2) and five terminal devices (namely, a terminal device 1 to a terminal device 5) are included is used. The terminal device 1 to the terminal device 5 may send information to the network device 1 and/or the network device 2. Accordingly, the network device 1 or the network device 2 may send information to any one of the terminal device to the terminal device 5. It should be noted that quantities of network devices and terminal devices in FIG. 1 are merely examples, and more or fewer network devices or terminal devices may be further included.

In this application, the terminal device is a device having a wireless transceiver function, and may send a signal to the network device, or receive a signal from the network device. The terminal device may include user equipment (user equipment, UE), and is sometimes also referred to as a terminal, an access station, a UE station, a remote station, a wireless communication device, a user apparatus, or the like. The terminal device is configured to connect a person, an object, a machine, and the like, may be widely used in various scenarios, and includes, for example, but is not limited to terminal devices in the following scenarios: cellular communication, device to device (device to device, D2D), V2X, machine-to-machine/machine type communication (machine-to-machine/machine type communication, M2M/MTC), an IoT, virtual reality (virtual reality, VR), augmented reality (augmented reality, AR), industrial control (industrial control), self driving (self driving), telemedicine (telemedicine), a smart grid (smart grid), smart furniture, smart office, smart wearable, smart transportation, a smart city (smart city), an uncrewed aerial vehicle, and a robot. As shown in FIG. 1, the terminal device may be a mobile phone, a tablet computer, a game controller, smart glasses, a smart band, or the like.

If the various terminal devices described above are located in a vehicle (for example, placed in the vehicle or mounted in the vehicle), the terminal devices may be considered as vehicle-mounted terminal devices. For example, the vehicle-mounted terminal devices are also referred to as on board units (on board units, OBUs). The terminal device in this application may alternatively be an in-vehicle module, an automobile module, an onboard component, an automotive chip, or an on board unit that is built in a vehicle as one or more components or units. The vehicle may implement a method in this application by using the in-vehicle module, the automobile module, the onboard component, the automotive chip, or the on board unit that is built in the vehicle.

In this application, the network device may be an access device through which the terminal device accesses a mobile communication system in a wireless manner, and includes, for example, an access network (access network, AN) device, for example, a base station. The network device may alternatively be a device that communicates with the terminal device over an air interface. The network device may include an evolved NodeB (evolved NodeB, eNB/eNodeB) in the LTE system or long term evolution-advanced (long term evolution-advanced, LTE-A). The network device may alternatively include a next generation NodeB (next generation NodeB, gNB) in the NR system. The network device may alternatively include an access node or the like in a wireless-fidelity (wireless-fidelity, Wi-Fi) system. The network device may alternatively be a station (station), a relay station, a vehicle-mounted device, a future evolved public land mobile network (public land mobile network, PLMN) device, a device in a D2D network, a device in an M2M network, a device in an internet of things IoT network, a network device in a PLMN network, or the like. A specific technology and a specific device form that are used for the network device are not limited in embodiments of this application.

In addition, the base station in embodiments of this application may include a central unit (central unit, CU) and a distributed unit (distributed unit, DU), and a plurality of DUs may be centrally controlled by one CU. The CU and the DU may be divided based on protocol layer functions that the CU and the DU have in a wireless network. For example, functions of a packet data convergence protocol (packet data convergence protocol, PDCP) layer and a protocol layer above the packet data convergence protocol layer are set on the CU, and functions of protocol layers below PDCP, for example, a radio link control (radio link control, RLC) layer and a medium access control (medium access control, MAC) layer, are set on the DU. It should be noted that division based on such a protocol layer is merely an example, and division may alternatively be performed based on another protocol layer. A radio frequency apparatus may be remotely disposed and not placed in the DU, may be integrated into the DU, or may be partially remotely disposed and partially integrated into the DU. This is not limited in embodiments of this application. In addition, in some embodiments, a control plane (control plane, CP) and a user plane (user plane, UP) of the CU may alternatively be separated into different entities for implementation, where the entities are a control-plane CU entity (CU-CP entity) and a user-plane CU entity (CU-UP entity). The control plane CU-CP of the CU further includes a further division architecture. That is, an existing CU-CP is further divided into a CU-CP 1 and a CU-CP 2. The CU-CP 1 includes various radio resource management functions, and the CU-CP 2 includes only an RRC function and a PDCP-C function (namely, a basic function of control plane signaling at the PDCP layer).

In embodiments of this application, a communication apparatus configured to implement a function of the network device or the terminal device may be the network device or the terminal device, or may be an apparatus, for example, a chip system, that can support the network device or the terminal device in implementing the function, where the apparatus may be installed in the network device or the terminal device. In the technical solutions provided in embodiments of this application, an example in which an apparatus configured to implement the function of the network device is the network device and an apparatus configured to implement the function of the terminal device is the terminal device is used to describe the technical solutions provided in embodiments of this application.

FIG. 2 is a diagram of coverage areas of a plurality of network devices (for example, a gNB 0 to a gNB 6). In FIG. 2, an example in which the areas covered by the gNB 0 to the gNB 6 do not overlap is used. Due to mobility of a terminal device, the terminal device may move from an area covered by one gNB to an area covered by another gNB, and a cell that can serve the terminal device is also accordingly changed. To enable each terminal device to normally operate in different cells, for each cell, the network device periodically broadcasts common information corresponding to the cell (the common information is described in detail below). Consequently, energy consumption of the network device is higher. Accordingly, energy consumption of a communication system including the network device is also higher.

To reduce the energy consumption of the system, in this application, a frequency at which a first network device sends common information of a first cell may be reduced, a first network device sends some of common information of a first cell, or a first network device does not send common information of a first cell. In this case, for a first terminal device that camps on the first cell, the first network device may indicate the first terminal device to perform cell selection or reselection, so that the first terminal device accesses another cell, to reduce a quantity of terminal devices served by the first cell, and further reduce the energy consumption. Because the first terminal device is indicated by the first network device to perform cell selection or reselection, even if the first network device reduces energy consumption, normal cell access of the first terminal device is not affected, and normal communication of the first terminal device can be ensured.

For example, the example in FIG. 2 is still used. As shown in FIG. 3, the gNB 0 may send common information of the gNB 0 and common information of the gNB 1 to the gNB 6 at a higher sending power, and the gNB 1 to the gNB 6 may send some of the common information, or even do not send the common information. In this case, energy consumption of each of the gNB 1 to the gNB 6 is lower, and total energy consumed by the gNB 0 to the gNB 6 (illustrated by using a dashed line in FIG. 3) is lower than total energy consumed by the gNB 0 to the gNB 6 to respectively send the common information of the gNB 0 to the gNB 6. In this way, overall energy consumption of a communication system is reduced. From the gNB 0, in addition to receiving common information of a cell of the gNB 0, the terminal device may further receive common information of cells of the gNB 1 to the gNB 6. Therefore, normal cell access of the terminal device is not affected.

Before the technical solutions provided in embodiments of this application are specifically described, some concepts in embodiments of this application are first described. It should be noted that these explanations of the concepts are intended to make embodiments of this application easier to understand, but should not be considered as a limitation on the protection scope claimed in this application.
(1) The common information is information needed by the terminal device to normally operate in a cell or access the cell. The common information is usually sent by the network device to the terminal device in the cell in a broadcast manner. It should be noted that the common information is a general term of configuration information for ease of description. Specific content included in the common information is not limited in this application. In different communication systems, the common information of the cell is also different. For example, the common information may include a downlink reference signal, system information, and a paging message. The downlink reference signal includes, for example, a synchronization signal or another possible reference signal.
(2) The synchronization signal may be for helping the terminal device perform time synchronization with the cell and obtain a physical cell identifier (physical cell identifier, PCI) of the cell. The time synchronization between the terminal device and the cell is mainly downlink time synchronization, so that the terminal device can obtain information and the like from the network device. The terminal device may determine boundaries of a time domain resource and a frequency domain resource by detecting a position of the synchronization signal, to align with the signal sent by the network device. The PCI of the cell is usually included in information carried in the synchronization signal, for example, a sequence carried in the synchronization signal.

A synchronization signal in LTE mainly includes a primary synchronization signal (primary synchronization signal, PSS) and a secondary synchronization signal (secondary synchronization signal, SSS). For LTE frequency division multiplexing (LTE frequency division duplexing, LTE-FDD), the PSS periodically appears on last orthogonal frequency division multiplexing (orthogonal frequency division multiplexing, OFDM) symbols of a slot 0 and a slot 10, and the SSS periodically appears on 2^{nd} last OFDM symbols of the slot 0 and the slot 10. For LTE time division multiplexing (LTE time division duplexing, LTE-TDD), the PSS periodically appears on 3^{rd} OFDM symbols of a subframe 1 and a subframe 6, and the SSS periodically appears on last OFDM symbols of a subframe 0 and a subframe 5. The synchronization signal in LTE occupies 62 subcarriers in a middle of cell bandwidth in frequency domain.

A synchronization signal in NR mainly includes a PSS, an SSS, and a physical broadcast channel (physical broadcast channel, PBCH), which are collectively referred to as an SSB. One SSB includes four OFDM symbols in time domain, and consists of 240 consecutive subcarriers in frequency domain.
(3) The system information mainly includes basic configuration information of the cell and information about a service supported by a network that are provided for the terminal device. For the NR system, the system information may include a MIB, a SIB1, and other system information (other system information, OSI). The MIB and the SIB1 are necessary system information, and include necessary information for the terminal device to access the cell.
(4) Paging is a means by which the network device indicates, when a downlink service arrives, a terminal device in a radio resource control (radio resource control, RRC) non-connected state to access a network. Usually, the network device sends the paging message at/within agreed time, and the terminal device receives the paging message at/within the agreed time. To reduce energy consumption, the agreed time may be periodic. The terminal device determines, based on content of the paging message, whether the network device is paging the terminal device. For example, the paging message may carry identification information of a to-be-paged terminal device. To ensure that the time for receiving the paging message by the terminal device is consistent with the time for sending the paging message by the network device, the network device broadcasts a configuration parameter for receiving the paging message, for example, a time domain configuration (for example, a paging cycle or a paging frame density) of the paging message and a frequency domain configuration of the paging message.
(5) Cell selection and reselection: To ensure an access success rate and shorten access time, the terminal device may perform cell selection based on signal quality of a measured cell and a parameter of a system message. After the terminal device camps on a selected cell, because the terminal device moves or cell edge channel fading is different, receiving quality of signals from different network devices to the terminal device is different. Consequently, the terminal device performs reselection between different cells.

When performing cell reselection, the terminal device needs to measure a neighboring cell, and compares a measurement quantity of the measured neighboring cell with a threshold. The terminal device can have, only when the measurement quantity of the measured neighboring cell is greater than the threshold, an opportunity to reselect to the measured neighboring cell. Currently, the terminal device determines, based on a camped cell and the measurement quantity of the neighboring cell, whether to trigger the cell reselection. That is, cell reselection performed by the terminal device is currently triggered by the terminal device.

A measurement quantity of a cell may represent signal quality of the cell, and may include at least one of a received signal code power (received signal code power, RSCP), a reference signal received power (reference signal received power, RSRP), reference signal received quality (reference signal received quality, RSRQ), a signal-to-noise ratio (signal-to-noise ratio, SNR), a signal to interference plus noise ratio (Signal to Interference plus Noise Ratio, SINR), a reference signal strength indication (reference signal strength indication, RSSI), or other signal quality. In correspondence to quality of the cell, a quality reference threshold of the cell may include an RSCP threshold, an RSRP threshold, an RSRQ threshold, an SNR threshold, an SINR threshold, an RSSI threshold, or the like.

The neighboring cell may include one or more of the following cells: a cell on a high-priority frequency, a cell on a low-priority frequency, a cell on a same frequency as a serving cell, or a cell on a different frequency from the serving cell and with a same priority as the serving cell. For these cells, the terminal device may preferentially determine whether the cell on the high-priority frequency can be reselected to. If the cell on the high-priority frequency can be reselected to, the terminal device reselects to the cell on the high-priority frequency, and does not determine anymore whether another cell can be reselected to. If the cell on the high-priority frequency cannot be reselected to, the terminal device may determine whether the cell on the same frequency as the serving cell can be reselected to, or determine whether the cell on the different frequency from the serving cell and with the same priority as the serving cell can be reselected to. If neither of the cell on the same frequency as the serving cell and the cell on the different frequency from the serving cell and with the same priority as the serving cell can be reselected to, the terminal device may determine whether the cell on the low-priority frequency can be reselected to. Alternatively, if the cell on the high-priority frequency cannot be reselected to, the terminal device may determine whether the cell on the low-priority frequency can be reselected to. If the cell on the low-priority frequency cannot be reselected to, the terminal device may determine whether the cell on the same frequency as the serving cell can be reselected to, or determine whether the cell on the different frequency from the serving cell and with the same priority as the serving cell can be reselected to.

The cell reselection and the cell selection are not specifically limited in this application, and the terminal device performs cell selection or reselection based on a specific case.

(6) Random access is a process performed by the terminal device to obtain uplink synchronization, an uplink resource, an air interface terminal identifier, and the like when the terminal device accesses the network. From a perspective of an amount of signaling in a random access process, the random access process includes 4-step random access and 2-step random access. From a perspective of whether the random access is contention-based random access, the random access is classified into the contention-based random access and non-contention-based random access. From a perspective of a terminal device in an RRC connected state and the terminal device in the RRC non-connected state, the random access is classified into random access of the terminal device in the RRC connected state and random access of the terminal device in the RRC non-connected state. The terminal device sends the random access, first determines a random access resource based on a random access resource configuration and the system information sent by the network device, and sends a preamble on the random access resource.

In this application, the "network" and the "system" are interchangeable. "At least one" means one or more, and "a plurality of" means two or more. "And/or" describes an association relationship between associated objects, and represents that three relationships may exist. For example, A and/or B may represent the following three cases: Only A exists, both A and B exist, and only B exists. A and B may be singular or plural. The character "/"usually indicates an "or" relationship between the associated objects. "At least one of the following" or a similar expression thereof means any combination of these items, including a singular item or any combination of plural items. For example, at least one of a, b, or c may indicate: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of obj ects. For example, a first network device and a second network device are merely for distinguishing between different network devices, but do not indicate different priorities, importance, or the like of the two network devices.

Embodiments of this application are intended to not affect cell access of the terminal device when the energy consumption of the system is reduced. The energy consumption of the system may be reduced by reducing energy consumption of some network devices in the system. For example, some network devices in the system may send common information of one or more cells at a lower frequency, send some of the common information of the one or more cells, or even do not send the common information of the cell. The common information of these cells may be sent by another network device, so that impact on normal cell access of the terminal device can be reduced. Comparatively, when the network device does not need to save energy, the network device sends the common information of the cell at a higher frequency.

In embodiments of this application, that the network device needs to save the energy is alternatively described as that the network device needs to enter an energy-saving mode or that the network device needs to operate in energy-saving mode. Comparatively, when the network device does not need to save the energy, the network device operates in non-energy-saving mode. Alternatively, when the network device needs to save the energy, a cell of the network device needs to enter an energy-saving mode and operate in energy-saving mode. Both the energy-saving mode and the non-energy-saving mode may be represented by some configuration parameters of the common information of the cell. Parameters configured in energy-saving mode are different from parameters configured in non-energy-saving mode. In addition, parameters configured in energy-saving mode of different network devices are also different, and parameters configured in non-energy-saving mode of the different network devices may also be different.

In an example, Table 1 shows an implementation form of the energy-saving mode and the non-energy-saving mode. FIG. 3 is used as an example. In Table 1, an example in which the common information of the cells of the gNB 1 to the gNB 6 is sent by the gNB 0 in energy-saving mode is used. In addition, in Table 1, an example in which the common information of the cell includes the downlink reference signal, the system information, and the paging is used. A parameter corresponding to any type of information in the common information includes a parameter indicating whether to send, a sending power, a sending periodicity, or the like.

**Table 1**

| Operation mode | Network device | Downlink reference signal | System information | Paging |
|---|---|---|---|---|
| Non-energy-saving mode | gNB 0 | Sending, power 1, and periodicity 1 | Sending | Sending |
| | gNB 1 to gNB 6 | Sending, power 2, and periodicity 2 (the power 2 is the same as or different from the power 1, and the periodicity 2 is the same as or different from the periodicity 1) | Sending | Sending |
| Energy-saving mode | gNB 0 | Sending, power 3, and periodicity 3 (the power 3 is greater than the power 1; and the periodicity 3 is the same as or different from the periodicity 1, or the periodicity 3 is the same as or different from the periodicity 2) | Sending, and sending of additional information (for example, configuration information of the cells of the gNB 1 to the gNB 6) | Sending |
| | gNB 1 to gNB 6 | Sending, power 4, and periodicity 4 (the power 4 is less than the power 3, the power 4 is the same as or different from the power 1 or the power 2, and the periodicity 4 may be greater than the periodicity 1, the periodicity 2, or the periodicity 3) | No sending, or sending of some content in the system information | No sending |

As shown in Table 1, in non-power-saving mode, the gNB 0 sends a downlink reference signal, system information, and paging at the power 1 and the periodicity 1, and the gNB 1 to the gNB 6 send downlink reference signals, system information, and paging at the power 2 and the periodicity 2. The power 2 may be the same as or different from the power 1. The periodicity 2 may be the same as or different from the periodicity 1.

In energy-saving mode, the gNB 0 sends a downlink reference signal, system information, and paging at the power 3 and the periodicity 3, and further needs to send the additional information, for example, configuration information of a cell of each of the gNB 1 to the gNB 6. The power 3 is greater than the power 1, and the periodicity 3 may be the same as or different from the periodicity 1 or the periodicity 2. In energy-saving mode, each of the gNB 1 to the gNB 6 sends a downlink reference signal at the power of 4 and the periodicity 4, does not send system information or sends some content in the system information, and does not send paging. The power 4 is less than the power 3, and the power 4 may be the same as or different from the power 2 or the power 1. The periodicity 4 may be greater than the periodicity 1, the periodicity 2, or the periodicity 3. Because the power 4 is less than the power 3, and any one of the gNB 1 to the gNB 6 sends less content than that in non-power-saving mode, energy consumption of the any one of the gNB 1 to the gNB 6 is lower. In general, total energy consumption of the gNB 0 to the gNB 6 is lower.

It should be noted that, in Table 1, an example in which different gNBs in the gNB 1 to the gNB 6 correspond to same configuration information in energy-saving mode is used. Optionally, the different gNBs in the gNB 1 to the gNB 6 may correspond to different configuration information in energy-saving mode. For example, when the gNB 2 is in energy-saving mode, a sending power of the downlink reference signal is the power 4; and when the gNB 3 is in energy-saving mode, a sending power of the downlink reference signal is, for example, a power 5, where the power 4 is different from the power 5.

Table 1 describes an energy-saving design of the communication system at a granularity of the network device. In this application, the energy-saving mode may alternatively be designed at a granularity of the cell.

In an example, Table 2 shows another implementation form of the energy-saving mode and the non-energy-saving mode. In Table 2, an example in which cell common information of a cell 2 (cell 2) is sent by a cell 1 (cell 1) in energy-saving mode is used. In addition, in Table 2, an example in which the common information of the cell includes the downlink reference signal, the system information, and the paging is used.

**Table 2**

| Operation mode | | Downlink reference signal | System information | Paging |
|---|---|---|---|---|
| Non-energy-saving mode | Cell 1 | Sending, power 1, and periodicity 1 | Sending | Sending |
| | Cell 2 | Sending, power 2, and periodicity 2 (the power 2 is the same as or different from the power 1, and the periodicity 2 is the same as or different from the periodicity 1) | Sending | Sending |
| Energy-saving mode | Cell 1 | Sending, power 3, periodicity 3 (the power 3 is greater than the power 1, and the periodicity 3 is the same as or different from the periodicity 1 or the periodicity 2) | Sending, and sending of configuration information of the cell 2 | Sending |
| | Cell 2 | Sending, power 4, and periodicity 4 (the power 4 is less than the power 3, the power 4 is the same as or different from the power 1 or the power 2, and the periodicity 4 may be greater than the periodicity 1, the periodicity 2, or the periodicity 3) | No sending, or sending of some content in the system information | No sending |

In Table 2, the cell 1 and the cell 2 may be cells of a same network device. The cell 1 corresponds to the gNB 0 in Table 1, and the cell 2 corresponds to any one of the gNB 1 to the gNB 6 in Table 1. That is, the gNB 0 in Table 1 may be replaced with the cell 1, and the gNB 1 to the gNB 6 in Table 1 may be replaced with the cell 2. Therefore, for details of Table 2, refer to the related content of Table 1. Details are not described herein again.

In both Table 1 and Table 2, an example in which the network device or the cell sends some of the common information in energy-saving mode is used. For example, the network device or the cell sends the downlink reference signal. In consideration of maximum energy saving, in energy-saving mode, the network device or the cell may alternatively not send the common information. For example, the gNB 1 to the gNB 6 or the cells of the gNB 1 to the gNB 6 may not send the common information. In this type of energy-saving mode, the gNB 1 to the gNB 6 or the cells of the gNB 1 to the gNB 6 may alternatively replicate a signal of the gNB 0, and send the signal, to enhance coverage of the gNB 0. It may be understood that the gNB 1 to the gNB 6 or the cells of the gNB 1 to the gNB 6 may replicate and send the signal of the gNB 0. In this way, only a radio frequency module needs to be enabled, and a baseband chip does not need to perform processing to generate a message. Therefore, the energy consumption is also lower.

In an example, Table 3 shows still another implementation form of the energy-saving mode and the non-energy-saving mode. In Table 3, an example in which the common information of the cell includes the downlink reference signal, the system information, and the paging is used.

**Table 3**

| Operation mode | Network device/Cell | Downlink reference signal | System information | Paging |
|---|---|---|---|---|
| Non-energy-saving mode | gNB 0/Cell 1 | Sending, power 1, and periodicity 1 | Sending | Sending |
| | gNB 1 to gNB 6/Cell 2 | Sending, power 2, and periodicity 2 (the power 2 is the same as or different from the power 1, and the periodicity 2 is the same as or different from the periodicity 1) | Sending | Sending |
| Energy-saving mode | gNB 0/Cell 1 | Sending, power 3, periodicity 3 (the power 3 is greater than the power 1, and the periodicity 3 is the same as or different from the periodicity 1 or the periodicity 2) | Sending | Sending |
| | gNB 1 to gNB 6/Cell 2 | No sending, or replication of the signal of the gNB 0 for sending | No sending, or replication of the signal of the gNB 0 for sending | No sending, or replication of the signal of the gNB 0 for sending |

It should be noted that, in Table 3, the cell 1 and the cell 2 may be cells of a same gNB.

From Table 1 to Table 3, it may be considered that there are two types of energy-saving modes. That is, the energy-saving modes in Table 1 and Table 2 are one type of energy-saving modes, and the energy-saving mode in Table 3 is one type of energy-saving mode. For ease of description, the energy-saving modes in Table 1 and Table 2 may be referred to as first energy-saving modes, and the energy-saving mode in Table 3 may be referred to as a second energy-saving mode. In first energy-saving mode, the gNB 1 to the gNB 6/the cell 2 send/sends the common information of the cell at a lower sending power and a longer periodicity. In second energy-saving mode, the gNB 1 to the gNB 6/the cell 2 do/does not send the common information of the cell, or send/sends the signal of the gNB 0. It may be considered that the second energy-saving mode further includes two types of energy-saving modes. One type of energy-saving mode is not sending the common information, for example, the downlink reference signal, the system information, and the paging. The other type of energy-saving mode is replicating the signal of the gNB 0 for sending. Alternatively, it may be considered that there are three types of energy-saving modes. That is, the energy-saving modes in Table 1 and Table 2 are one type of energy-saving mode. In Table 3, an energy-saving mode in which the common information is not sent is one type of energy-saving mode, and an energy-saving mode in which the signal of the gNB 0 is replicated for sending is one type of energy-saving mode.

In the following descriptions, an example in which the energy-saving modes in Table 1 and Table 2 are referred to as the first energy-saving modes and the two types of energy-saving modes in Table 3 are collectively referred to as the second energy-saving mode is used. The second energy-saving mode includes a first energy-saving sub-mode and a second energy-saving sub-mode. The first energy-saving sub-mode is the energy-saving mode in which the common information is not sent, and the second energy-saving sub-mode is the energy-saving mode in which the signal of the gNB 0 is replicated for sending.

It should be noted that specific names of various energy-saving modes are not limited in embodiments of this application. The energy-saving mode may also be referred to as an energy-saving state. Accordingly, the non-energy-saving mode may also be referred to as a non-energy-saving state. The energy-saving mode may be considered as an operation mode. For example, the first energy-saving mode is also referred to as a first operation mode, and the second energy-saving mode is also referred to as a second operation mode. The second operation mode includes a first operation sub-mode (equivalent to the first energy-saving sub-mode) and a second operation sub-mode (equivalent to the second energy-saving sub-mode). The non-energy-saving mode is also referred to as a third operation mode.

That the network device operates in non-energy-saving mode may also be described as that the network device operates in first operation mode or that the network device enters the non-energy-saving state. That the network device operates in energy-saving mode may also be described as that the network device operates in second operation mode or that the network device enters the energy-saving state. In embodiments of this application, that the network device uses configuration information in non-energy-saving mode may be considered as that the network device operates in non-energy-saving mode. That the network device uses configuration information in energy-saving mode may be considered as that the network device operates in energy-saving mode.

With reference to the accompanying drawings, the following describes the method provided in embodiments of this application. In the following description process, an example in which the method is applied to the network architecture shown in FIG. 1 and the method is performed by a network device and a terminal device is used. The network device may be the network device in the network architecture shown in FIG. 1, and the terminal device may be the terminal device in the network architecture shown in FIG. 1. For ease of description, in the following descriptions, a first cell is denoted as a cell 1, and a second cell is denoted as a cell 2. A network device to which the first cell belongs is referred to as a first network device, and may be any one of the gNB 1 to the gNB 6 in FIG. 3. A network device to which the second cell belongs is referred to as a second network device, and may be the gNB 0 in FIG. 3.

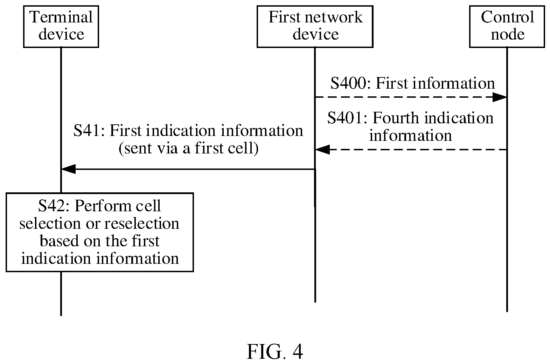

FIG. 4 is a schematic flowchart of a first communication method according to an embodiment of this application. The first communication method may be applied to a terminal device in an RRC non-connected state, and the RRC non-connected state includes an RRC idle state and an RRC inactive state.

S41: A first network device sends first indication information to the terminal device via a first cell. Accordingly, the terminal device receives the first indication information from the first cell.

The first cell is a cell of the first network device, and the terminal device camps on the first cell. When determining that the first network device or the first cell needs to enter an energy-saving mode, the first network device may send the first indication information to the terminal device via the first cell. The first indication information may indicate the terminal device to perform cell selection or reselection. The terminal device receives the first indication information, and performs cell selection or reselection based on the first indication information. The first indication information may indicate the terminal device to perform cell selection or reselection, or the first indication information indicates any one of the following: The first cell stops serving, the first cell is disabled, the first cell cannot provide a camping service, camping on the first cell is not allowed, or the first cell enters the energy-saving mode (or an energy-saving state).

After sending the first indication information, the first network device may enter the energy-saving mode. For example, after sending the first indication information, the first network device enters a first energy-saving mode or enters a first energy-saving sub-mode or a second energy-saving sub-mode after a period of time. For the terminal device, the first network device schedules the terminal device to perform cell selection or reselection. In comparison with a current case in which a network side does not indicate the terminal device to perform cell selection or reselection, in this embodiment of this application, the terminal device is indicated by the first network device to perform cell selection or reselection, and can access another cell in time to obtain a communication service. Therefore, when the first network device reduces energy consumption, normal cell access of the terminal device is not affected.

It may be understood that the first network device sends the first indication information to a plurality of terminal devices in the RRC non-connected state. To ensure that all of these terminal devices can receive the first indication information, duration within which the first network device sends the first indication information is at least one system information modification periodicity.

S400: The first network device sends first information to a control node. Accordingly, the control node receives the first information from the first network device.

Whether the first network device may enter the energy-saving mode may be determined by the control node. That is, the control node may determine whether the first network device may enter the energy-saving mode. The control node may be an access network device or a core network device, for example, an access and mobility management function (access and mobility management function, AMF) entity or an operation, administration, and maintenance (operation, administration, and maintenance, OAM) entity.

The control node may determine, based on service load information and/or energy consumption information of a plurality of network devices within a period of time, whether the plurality of network devices may enter the energy-saving mode. If service load of the plurality of network devices within the period of time is low, and/or energy consumption of the plurality of network devices within the period of time is low, it may be considered that one or more of the plurality of network devices are capable of serving a terminal device connected to the plurality of network devices. For example, the plurality of network devices are connected to a small quantity of terminal devices, and one of the plurality of network devices can serve the terminal device connected to the plurality of network devices. In this case, the control node may determine that all of the plurality of network devices may enter the energy-saving mode.

Each network device may separately report service load information and/or energy consumption information of the network device within the period of time to the control node. For example, the plurality of network devices include the first network device and a second network device, and the first network device and the second network device may separately report service load information and/or energy consumption information within first duration to the control node. Optionally, a time range in which each network device reports the service load information and/or the energy consumption information of the network device may be determined by the control node, or the network devices negotiate to report the time range.

For example, the first network device may send the first information to the control node, where the first information may indicate service load and/or energy consumption of the first network device within the first duration. Specifically, the first information may include one or more of the following information: a quantity of terminal devices connected to the first network device within the first duration; a proportion of an average air interface resource or a maximum air interface resource used by the first network device within the first duration; average power consumption or accumulated power consumption of the first network device within the first duration; or energy efficiency of the first network device within the first duration or energy consumed by the first network device to send system information within the first duration. It should be understood that the energy efficiency is a ratio of energy to an amount of communicated information. Another network device, for example, the second network device, may also send first information to the control node, to indicate service load and/or energy consumption of the second network device within the first duration. It should be noted that a specific name of the first information is not limited in this embodiment of this application. For example, the first information may also be referred to as energy consumption information or service load information.

The control node may determine, based on the first information from the first network device and the first information from the second network device, whether the first network device and the second network device may enter the energy-saving mode. For example, when the service load and/or the energy consumption of the first network device and the second network device within the period of time are/is low, the first network device may serve a terminal device connected to the two network devices, and the control node may determine that the first network device and the second network device may enter the energy-saving mode.

In the foregoing example, the control node determines, based on service load and/or energy consumption of each network device within the period of time, whether the network device may save energy. That is, the control node determines energy saving that is at a granularity of the network device. A network device may alternatively determine energy saving that is at a granularity of a cell. For example, for the first network device, if service load and/or energy consumption of a plurality of cells of the first network device within the period of time are/is low, it indicates that the first network device may serve, via one or more of the plurality of cells, a terminal device connected to the first network device. In this case, the first network device may determine that the first network device may save energy. The first network device may determine, based on service load and/or energy consumption of the first network device without participation of the control node, whether the first network device may enter the energy-saving mode. Therefore, S400 is not a necessary step, and is illustrated by using a dashed line in FIG. 4.

S401: The control node sends fourth indication information to the first network device. Accordingly, the first network device receives the fourth indication information from the control node.

The control node determines that the first network device may enter the energy-saving mode, and may indicate the first network device to enter the energy-saving mode. For example, the control node may send, to the first network device, indication information indicating the first network device to enter the energy-saving mode. For example, the indication information is referred to as the fourth indication information. The fourth indication information may indicate the first network device to enter the energy-saving mode, or the fourth indication information indicates the first network device to operate in first operation mode or second operation mode.

Specifically, the fourth indication information may include one or more of the following configuration information: a sending power of the first cell, a sending periodicity of the first cell, second mode indication information, or second time information, where the second mode indication information indicates the first cell to use the one or more of the configuration information, and the second time information indicates start time for using the one or more of the configuration information by the first cell. If the first cell uses the one or more of the foregoing configuration information, it may be considered that the first cell enters the energy-saving mode. The second mode indication information may be 1-bit information, and indicate the first network device to or not to enter the energy-saving mode. Alternatively, a second mode indication may indicate a specific energy-saving mode. For example, the second mode indication information may indicate the first energy-saving mode or a second energy-saving mode, or the second mode indication information may indicate the first energy-saving sub-mode or the second energy-saving sub-mode.

That the second time information indicates start time for using the one or more of the configuration information by the first cell is equivalent to that the second time information may indicate start time for entering the energy-saving mode by the first network device. The second time information may include a first absolute time point, and the first absolute time point is the start time for entering the energy-saving mode by the first network device. It should be understood that a plurality of network devices in a system including the first network device may all enter the energy-saving mode, and indicating the second time information to the first network device by the control node can enable a success rate of information exchange between the first network device and another network device that enters the energy-saving mode in the system to be improved (specifically described in the following embodiments). Optionally, the second time information may further include second duration or a second absolute time point, and indicate time for exiting the energy-saving mode by the first network device. The time for exiting the energy-saving mode by the first network device is the second absolute time point, or a time point obtained by summing the first absolute time point and the second duration. For the sending power of the first cell and the sending periodicity of the first cell, refer to the descriptions of any one of Table 1 to Table 3. Details are not described herein again.

It should be understood that, if the first network device determines, without the participation of the control node, whether to enter the energy-saving mode, S401 does not need to be performed either, and therefore is illustrated by using a dashed line in FIG. 4.

Signaling that carries the first indication information is not limited in this embodiment of this application. For example, the first indication information may be carried in a paging message, or the first indication information may be carried on a physical downlink control channel for scheduling a paging message, to enable the terminal device to learn, as early as possible, that cell selection or reselection needs to be performed, so that the terminal device performs cell selection or reselection as soon as possible.

S42: The terminal device performs cell selection or reselection based on the first indication information.

The terminal device receives the first indication information, and may perform cell selection or reselection based on the first indication information. The terminal device performs cell selection or reselection. For a procedure in which the terminal device performs cell selection or reselection, refer to the foregoing descriptions. Details are not described herein again.

In a possible implementation, the first network device may further indicate, to the terminal device, a cell available for selection or reselection, to reduce a quantity of cells to be measured by the terminal device and reduce energy consumption of the terminal device, so that the terminal device accesses a cell as soon as possible. For example, the first network device may send assistance information to the terminal device via the first cell. Accordingly, the terminal device receives the assistance information from the first cell. The assistance information may indicate at least one candidate cell for providing the camping service for the terminal device. The terminal device may determine, based on the assistance information, to select or reselect to one of the at least one candidate cell.

For example, the assistance information may include information about at least one frequency. The terminal device searches for an appropriate cell on one of the at least one frequency, and then selects or reselects to the appropriate cell. Alternatively, the assistance information may indicate at least one frequency and at least one cell corresponding to one of the at least one frequency. The terminal device searches the indicated cell on the frequency for an appropriate cell, and does not need to search all cells on the frequency. Optionally, the assistance information may indicate a second cell of the second network device. The terminal device determines to select or reselect to the second cell.

The first network device may send the first indication information and the assistance information to the terminal device together. That is, the first indication information and the assistance information are carried in one piece of signaling. For example, the first indication information and the assistance information are carried in one paging message. Alternatively, the first network device may separately send the first indication information and the assistance information to the terminal device. For example, the assistance information may be carried in a broadcast message of the first cell. The first network device includes the assistance information in a paging message or the broadcast message of the first cell. In this way, before receiving the first indication information, the terminal device can learn of the candidate cell available for selection or reselection, so that the terminal device more quickly accesses the cell after receiving the first indication information, to reduce energy consumption of the terminal device in a cell searching process and ensure normal operation of the terminal device.

In this embodiment of this application, the first network device determines that the energy needs to be saved, and may indicate the terminal device to perform cell selection or reselection, so that impact on the normal cell access of the terminal device is reduced when the first network device reduces the energy consumption.

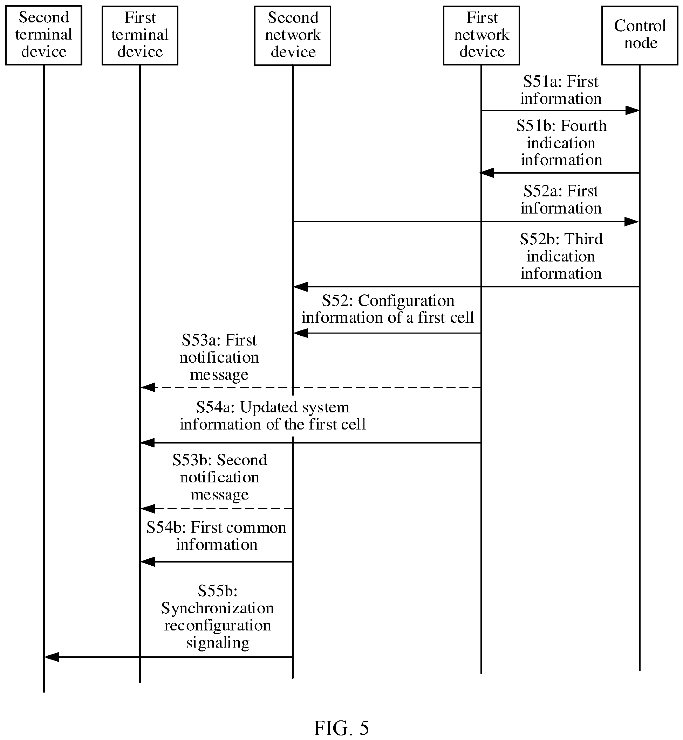

FIG. 5 shows a second communication method according to an embodiment of this application. In the following descriptions, an example in which the second communication method is performed by a terminal device, a first network device, and a second network device is used. There are a plurality of first network devices, and behavior of the first network devices is the same. In the following descriptions, one first network device is used as an example. The first network device may be any one of the gNB 1 to the gNB 6 in FIG. 3, and the second network device may be the gNB 0 in FIG. 3. A first cell is a cell of the first network device, and a second cell is a cell of the second network device.

S51a: The first network device sends first information to a control node. Accordingly, the control node receives the first information from the first network device.

S52a: The second network device sends first information to the control node. Accordingly, the control node receives the first information from the second network device.

The first network device may report service load information and/or energy consumption information of the first network device within a period of time to the control node, and the second network device may report service load information and/or energy consumption information of the second network device within the period of time to the control node, so that the control node determines whether the first network device and the second network device may enter an energy-saving mode. For details, refer to the related content of S400. Details are not described herein again. It should be noted that S51a may be performed before S52a, or may be performed after S52a.

S51b: The control node sends fourth indication information to the first network device. Accordingly, the first network device receives the fourth indication information from the control node.

The fourth indication information may indicate the first network device to enter the energy-saving mode. For details, refer to the related content of S401. Details are not described herein again. It may be understood that the fourth indication information includes identification information or address information of the second network device, so that the first network device determines the second network device, and the first network device may send information to the second network device.

S52b: The control node sends third indication information to the second network device. Accordingly, the second network device receives the third indication information from the control node.

The control node determines that the second network device may enter the energy-saving mode, and may send the third indication information to the second network device, to indicate the second network device to enter the energy-saving mode. Similar to the fourth indication information, the third indication information may indicate the second network device to enter the energy-saving mode, or indicate a second device to operate in first operation mode or second operation mode.

For example, the third indication information may include one or more of the following configuration information: a sending power of the second cell, a sending periodicity of the second cell, first mode indication information, or first time information, where the first mode indication information indicates the second cell to use the one or more of the configuration information, and the first time information indicates start time for using the one or more of the configuration information by the second cell. For the sending power of the second cell and the sending periodicity of the second cell, refer to the descriptions of any one of Table 1 to Table 3. Details are not described herein again.

If the second cell uses the one or more of the foregoing configuration information, it may be considered that the first cell enters the energy-saving mode. The first mode indication information may be 1-bit information, and indicate the second network device to or not to enter the energy-saving mode. Alternatively, a first mode indication may indicate a specific energy-saving mode. For example, the first mode indication information may indicate a first energy-saving mode or a second energy-saving mode, or second mode indication information may indicate a first energy-saving sub-mode or a second energy-saving sub-mode.

That the first time information indicates start time for using the one or more of the configuration information by the second cell is equivalent to that the first time information may indicate start time for entering the energy-saving mode by the second network device. The first time information may be an absolute time point, or may be duration. After the first network device and the second network device enter the energy-saving mode, the first network device and the second network device may exchange some information with each other. For example, the first network device may send configuration information of the first cell to the second network device. The control node indicates second time information to the first network device, and indicates the first time information to the second network device, so that a case in which the second network device cannot receive the configuration information of the first cell because the first network device excessively early or excessively late sends the configuration information of the first cell to the second network device can be avoided as much as possible.

It should be noted that S51b may be performed before S52b, or may be performed after S52b. The control node may alternatively be the first network device or the second network device.

S52: The first network device sends the configuration information of the first cell to the second network device. Accordingly, the second network device receives the configuration information of the first cell from the first network device.

After entering the energy-saving mode, the first network device may send some configuration information of a cell of the first network device to the second network device, and the second network device forwards the configuration information to the terminal device. For example, the first network device sends the configuration information of the first cell to the second network device. Then, the first network device does not need to send common information of the first cell to the terminal device, or sends the common information of the first cell to the terminal device at a lower frequency, to reduce energy consumption of the first network device.

The configuration information of the first cell may include identification information of the first cell, a common configuration of the first cell, and measurement configuration information. The measurement configuration information may indicate a time-frequency position of a downlink reference signal of the first cell, to facilitate measurement performed by the terminal device.

The common configuration of the first cell may include one or more of the following information: first uplink configuration information, first downlink configuration information, or a first threshold. The first uplink configuration information may be used by the terminal device to initiate random access or used by the terminal device to send information to a network side. The first downlink configuration information may be used by the terminal device to receive information from a network device. The first threshold may be used by the terminal device to determine whether to access the first cell.

The first downlink configuration information may include the following content: (1) a frequency domain position of the downlink reference signal of the first cell, a time domain position of the downlink reference signal of the first cell, and a sending periodicity of the downlink reference signal of the first cell; (2) time-frequency domain configuration information of a first PDCCH, where the first PDCCH may be for receiving a message from the network side in a random access process and subsequently, and a time-frequency domain configuration of the first PDCCH may include a time-frequency configuration of a control resource set (CORESET) and a configuration of search space (search space); and (3) time-frequency domain configuration information of a first PDSCH, where the first PDSCH may be for receiving a message from the network side in the random access process and subsequently, and a configuration of the first PDSCH may include information such as a time domain interval parameter K_0 between a PDCCH and a PDSCH, a mapping manner of the first PDSCH, and a quantity of repetitions.

The first uplink configuration information may include the following content: (1) a first random access configuration, including information such as a root sequence, a time domain position, and a frequency domain position that are of a preamble; (2) a first uplink bandwidth configuration, indicating a position of bandwidth used by the terminal device to send a message to the network side in the random access process and subsequently; (3) configuration information of a first PUCCH, including configurations such as a resource position and frequency hopping that are of the first PUCCH; and (4) configuration information of a first PUSCH, including information such as time domain resource assignment information and frequency hopping that are of the first PUSCH.

The first threshold may be a threshold that is based on a measurement quantity of the downlink reference signal, and the measurement quantity may be a reference signal received power (reference signal received power, RSRP), reference signal received quality (reference signal received quality, RSRQ), a signal to interference plus noise ratio (signal to interference plus noise ratio, SINR), or the like.

The measurement configuration information in the configuration information of the first cell may be associated with a beam. That is, the measurement configuration information is configured based on the beam. Related content of the measurement configuration information is described below.

After sending the configuration information of the first cell to the second network device, the first network device may enter the energy-saving mode. For example, the first network device may enter the energy-saving mode based on time indicated by the second time information. After receiving the configuration information of the first cell, the second network device may also enter the energy-saving mode. For example, the second network device may enter the energy-saving mode based on the time indicated by the first time information. Behavior of the first network device and the second network device after the first network device and the second network device enter the energy-saving mode is different. The following provides descriptions in sequence.

S53a: The first network device sends a first notification message to a first terminal device. Accordingly, the first terminal device receives the first notification message from the first network device.

The first terminal device is a terminal device in an RRC non-connected state. After entering the energy-saving mode, the first network device may not send the common information of the first cell to the first terminal device. That is, after the first network device sends the configuration information of the first cell to the second network device, the first network device does not need to send all of the common information of the first cell to the terminal device. Alternatively, after the first network device sends the configuration information of the first cell to the second network device, the first network device sends some of the common information of the first cell to the first terminal device, or sends the common information of the first cell to the first terminal device at a lower frequency. That is, system information that is of the first cell and that is to be sent by the first network device is changed. In this case, the first network device may indicate, to the first terminal device, that the system information of the first cell is changed.

For example, the first network device may send the first notification message to the first terminal device, where the first notification message may indicate that the system information of the first cell is changed. The first terminal device may determine, by receiving the first notification message, that the system information of the first cell is changed, so that the first terminal device can obtain updated system information of the first cell from the first network device.

S54a: The first network device sends the updated system information of the first cell to the first terminal device. Accordingly, the first terminal device receives the updated system information from the first cell.

When the system information of the first cell is changed, the first network device may send the updated system information of the first cell to the first terminal device. The updated system information of the first cell may include a MIB, and not include a SIB1. The first network device enters the energy-saving mode, and may send the updated system information of the first cell by using the one or more of the configuration information corresponding to the energy-saving mode. For example, the first network device may change a sending power and the sending periodicity for sending the downlink reference signal, and stop sending the system information. Stopping sending the system information includes stopping sending system information other than the MIB. For an NR system, the downlink reference signal may be changed from a cell-defining SSB (cell-defining SSB, CD-SSB) to a non-cell-defining SSB (non-cell-defining SSB, NCD-SSB). The cell-defining SSB indicates a sending position of the SIB1, and the non-cell-defining SSB indicates that the SIB1 is not sent. Specifically, the first network device may send the updated MIB at a modification boundary of the system information, and stop sending the SIB1, so that energy consumption of the first network device can be reduced. In addition, because the MIB may indicate whether the system information includes the SIB1, the system information may be reused to indicate whether the first cell may also be camped on.

The first terminal device receives the updated system information of the first cell. Because the updated system information does not include the SIB1, the first terminal device may determine that the first cell cannot be camped on, and the first terminal device determines to perform cell selection or reselection.

The first network device may further provide the first terminal device with a candidate cell for providing a camping service for the first terminal device. For example, the first network device may send second indication information to the first terminal device, where the second indication information may indicate at least one candidate cell, and the at least one candidate cell may provide the camping service for the first terminal device. The first terminal device may determine, based on the second indication information, to select or reselect to one of the at least one candidate cell. For example, the first terminal device may measure the at least one candidate cell, to select or reselect to the one of the at least one candidate cell based on a measurement result. Alternatively, the first terminal device may randomly select a cell from the at least one candidate cell. Optionally, the at least one candidate cell includes the second cell of the second network device. The first terminal device determines to select or reselect to the second cell. Then, the first terminal device may camp on the second cell.

The second indication information may be included in the updated system information of the first cell. For example, the second indication information is included in the MIB. Alternatively, the second indication information may be carried in a broadcast message of the first cell. The first network device indicates the at least one candidate cell to the first terminal device via the second indication information, to enable the terminal device to learn, as early as possible, of the candidate cell available for selection or reselection, so that the terminal device more quickly accesses the cell, to reduce energy consumption of the terminal device in a cell searching process. For specific implementation of the second indication information, refer to the specific implementation of the foregoing assistance information. For example, the second indication information may include information about at least one frequency. Details are not described herein again.

It should be noted that S53a is an optional step. That is, S53a is not a step that needs to be performed. Therefore, S53a is illustrated by using a dashed line in FIG. 5.

S53b: The second network device sends a second notification message to the first terminal device. Accordingly, the first terminal device receives the second notification message from the second network device.

The second network device enters the energy-saving mode, and may change a configuration parameter for sending the common information. For example, the second network device may change a sending power and a sending periodicity of an uplink reference signal. The second network device may further send the configuration information of the first cell to the first terminal device. Therefore, system information that is of the second cell and that needs to be sent by the second network device is changed. The second cell is a cell served by the second network device. In this case, the second network device may send the second notification message to the first terminal device, to notify the first terminal device that the system information of the second cell is changed. The first terminal device may determine, by receiving the second notification message, that the system information of the second cell is changed, so that the first terminal device can obtain updated system information of the second cell from the second network device.

S54b: The second network device sends first common information to the first terminal device, where the first common information may include the configuration information of the first cell and the system information of the second cell.

After entering the energy-saving mode, the second network device may send the first common information to the first terminal device, where the first common information includes the configuration information of the first cell and the system information of the second cell. That is, the second network device sends the configuration information of the first cell and the system information of the second cell to the first terminal device together.

From the second cell on which the first terminal device camps, in addition to receiving the system information of the second cell, the first terminal device may further obtain the configuration information of the first cell. Therefore, the first terminal device may access the first cell, or may access the second cell. Because the second cell may provide the configuration information of the first cell for the first terminal device, the first network device that provides the first cell may not send the configuration information of the first cell, to reduce the energy consumption of the first network device. For the terminal device, when the first network device reduces the energy consumption, the terminal device can still access the first cell. That is, normal cell access of the terminal device is not affected.

It should be noted that S53b is an optional step. That is, S53b is not a step that needs to be performed. Therefore, S53b is illustrated by using a dashed line in FIG. 5.

S55b: The second network device sends synchronization reconfiguration signaling to a second terminal device. Accordingly, the second terminal device receives the synchronization reconfiguration signaling from the second network device.

The second terminal device is a terminal device in an RRC connected state. Because the common information to be sent by the second network device is changed, the second network device may send the synchronization reconfiguration signaling to the second terminal device, to notify the second terminal device to obtain latest common information. The synchronization reconfiguration signaling may include information such as a sending periodicity and a sending power of a downlink reference signal of the second network device. The synchronization reconfiguration signaling may further include the configuration information that is of the first cell and that is provided by the first network device for the second network device.

It should be noted that S53a and S54a performed independently of S53b to S55b; and S53a and S54a are also performed before S53b, S54b, or S55b, or S53a and S54a are also performed after S53b, S54b, or S55b.

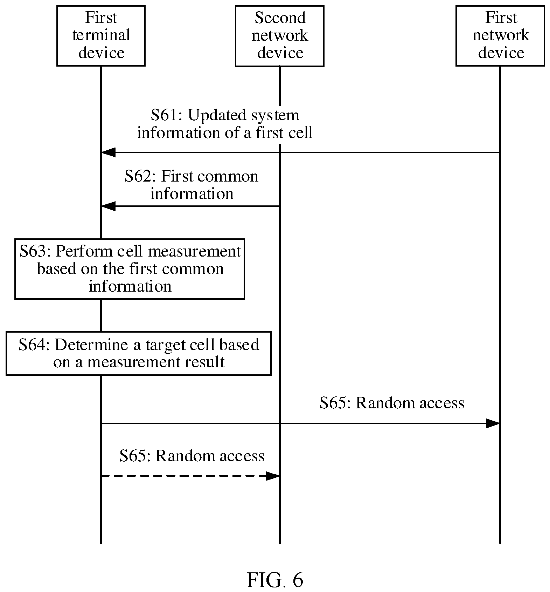

FIG. 6 shows a procedure in which a terminal device performs cell selection or reselection when a plurality of network devices in a system are in energy-saving mode. The terminal device is a terminal device in an RRC non-connected state. In this embodiment of this application. An example in which the terminal device is a first terminal device is used. In FIG. 6, a first cell is a cell of a first network device, and a second cell is a cell of a second network device.

S61: The first terminal device receives updated system information from the first cell.

The first terminal device receives the updated system information of the first cell from the first cell. That is, the first terminal device receives the updated system information from the first network device. The system information includes a MIB of the first cell, and does not include a SIB1 of the first cell. The first terminal device may determine that the first cell cannot be camped on, and need to perform cell selection or reselection. If the updated system information of the first cell includes second indication information, a cell, for example, the second cell, that may be camped on is further indicated to the first terminal device, and the first terminal device may determine to select or reselect to the second cell.

S62: The first terminal device receives first common information from the second cell.

The first common information may include a downlink reference signal of the second cell, system information of the second cell, configuration information of the first cell, and the like. After performing cell selection/reselection, the first terminal device camps on the second cell, and may obtain the first common information from the second cell. That is, the first terminal device receives the first common information from the second network device. The first terminal device may camp on the second cell, and receive, in the second cell, paging from the second network device.

S63: The first terminal device performs cell measurement based on the first common information.

The first terminal device may perform cell measurement based on measurement configuration information in the configuration information of the first cell in the first common information. Details of specific implementation of the cell measurement are not described. As described above, the measurement configuration information in the configuration information of the first cell is associated with a beam. That is, the measurement configuration information is configured based on the beam. In this embodiment of this application, the first terminal device only needs to perform cell measurement based on measurement configuration information corresponding to a beam of the second cell in which the first terminal device is located, to reduce a quantity of to-be-measured cells and reduce energy consumption of the first terminal device.

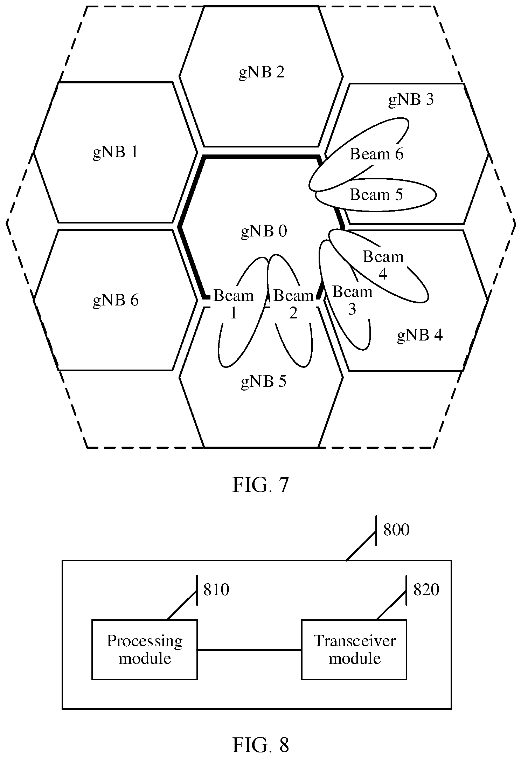

For example, FIG. 7 is a diagram of coverage areas of a plurality of network devices (a gNB 0 to a gNB 6) and beams of the gNB 0. FIG. 7 shows six beams (a beam 1 to a beam 6) of the gNB 0. Measurement configuration information corresponding to the beam 1 and the beam 2 is for measuring a cell of the gNB 5, measurement configuration information corresponding to the beam 3 and the beam 4 is for measuring a cell of the gNB 4, and measurement configuration information corresponding to the beam 5 and the beam 6 is for measuring a cell of the gNB 3. A system includes the gNB 0 to the gNB 6. In addition to sending system information of the gNB 0, the gNB 0 further sends configuration information of a cell of each of the gNB 1 to the gNB 6. If configuration information of a cell of each gNB is not configured based on a beam, when the first terminal device performs cell measurement, the first terminal device needs to traverse measurement configuration information of cells of the gNB 0 to the gNB 6, that is, needs to measure the cells of the gNB 0 to the gNB 6. A quantity of to-be-measured cells is larger. In this embodiment of this application, the first terminal device may perform cell measurement based on measurement configuration information corresponding to a beam of the first terminal device in the gNB 0. For example, the first terminal device may determine stronger beams such as the beam 1 and the beam 2 by performing cell measurement on the gNB 0. In this case, the first terminal device measures the cell of the gNB 5. A quantity of to-be-measured cells is smaller, so that the energy consumption of the first terminal device can be reduced.

S64: The first terminal device determines a target cell based on a measurement result.

After performing cell measurement based on the first common information, the first terminal device may determine the target cell based on the measurement result, to select a cell with better signal quality for access, thereby improving subsequent data transmission efficiency. An example in which the first terminal device measures the first cell is used. If the measurement result indicates that signal quality of the first cell is greater than or equal to signal quality of the second cell, the target cell may be the first cell. If the measurement result indicates that signal quality of the second cell is greater than or equal to signal quality of the first cell, the target cell may be the second cell. Alternatively, if the measurement result indicates that signal quality of the first cell is greater than or equal to a value compared with signal quality of the second cell, the target cell is the first cell. If the measurement result indicates that signal quality of the first cell is less than a value compared with signal quality of the second cell, the target cell is the second cell.

If the configuration information of the first cell includes a first threshold, and a measurement quantity of the first cell measured by the first terminal device is greater than or equal to the first threshold, the target cell is the first cell. If a measurement quantity of the first cell measured by the first terminal device is less than the first threshold, the target cell is the second cell. The measurement quantity of the first cell may include the signal quality of the first cell and the like.

S65: The first terminal device sends random access to the target cell.

After determining the target cell, the first terminal device sends the random access to the target cell based on configuration information of the target cell. In a random access process, the first terminal device also uses the configuration information of the target cell. After the first terminal device accesses the target cell, the first terminal device enters an RRC connected state, and sends or receives information in the target cell. If the target cell is the first cell, the first terminal device sends the random access to the first cell (illustrated by using a solid line in FIG. 6). If the target cell is the second cell, the first terminal device sends the random access to the second cell (illustrated by using a dashed line in FIG. 6).

In this embodiment of this application, in addition to sending the system information of the second cell, the second network device may further send the configuration information of the first cell. A network device that provides the first cell may send less configuration information of the first cell, or even not send the configuration information of the first cell, so that energy consumption of the network device is reduced. For the terminal device, although the network device that provides the first cell does not send the configuration information of the first cell, the terminal device may obtain the configuration information of the first cell from the second network device. Therefore, according to the method provided in this embodiment of this application, on a premise of reducing energy consumption of the system, the terminal device can normally access a cell, and normally operate in the accessed cell.

In the procedures shown in FIG. 5 and FIG. 6, the example in which the first cell is the cell of the first network device and the second cell is the cell of the second network device is used. The method provided in embodiments of this application may alternatively be applicable to one network device. That is, a first cell and a second cell belong to the network device. For example, the first cell and the second cell respectively correspond to different carriers. Coverage of the first cell and the second cell may be the same, or may be different.

An example in which the first cell and the second cell belong to a third network device is used. In this case, the third network device may determine, based on service load and/or energy consumption of the first cell and the second cell within a period of time, whether the first cell and the second cell may enter energy saving. If the first cell and the second cell may enter the energy-saving mode, behavior of the first cell after the first cell enters the energy-saving mode is the same as the behavior of the first network device after the first network device enters the energy-saving mode. Details are not described herein again. Likewise, behavior of the second cell after the second cell enters the energy-saving mode is the same as the behavior of the second network device after the second network device enters the energy-saving mode. Details are not described herein again.

Considering that the first cell and the second cell belong to the third network device and that overlapping area of the coverage of the first cell and the second cell is large, to balance load of the first cell and the second cell, a second network device may control a probability of accessing the first cell and a probability of accessing the second cell, and indicate the probabilities to a first network device. For example, first common information includes a first parameter, and the first parameter is for controlling the probability of accessing the first cell or the second cell. In this case, a first terminal device may determine a target cell based on the first parameter. Alternatively, a first terminal device may determine a target cell based on the first parameter and a first threshold.

For example, if the first parameter indicates that the probability of accessing the first cell is greater than or equal to the probability of accessing the second cell, the first terminal device determines that the target cell is the first cell. For example, if the first parameter indicates that a priority of the first cell is higher than a priority of the second cell, the first terminal device determines that the target cell is the first cell. If the first parameter indicates that a priority of the first cell is lower than a priority of the second cell, the first terminal device determines that the target cell is the second cell.

For another example, if a measurement quantity of the second cell is greater than the first threshold, and the first parameter indicates that a priority of the second cell is higher than a priority of the first cell, the first terminal device determines that the target cell is the second cell. If a measurement quantity of the second cell is less than the first threshold, and the first parameter indicates that a priority of the second cell is lower than a priority of the first cell, the first terminal device determines that the target cell is the first cell.

For another example, if the first parameter may be a scale factor, the first terminal device may generate a random number, the random number is greater than the scale factor, and a measurement quantity of the second cell is greater than or equal to the first threshold, the first terminal device determines that the target cell is the second cell. If the random number is greater than the scale factor, and a measurement quantity of the second cell is less than the first threshold, the first terminal device determines that the target cell is the first cell.

In the foregoing embodiments, an example in which the first network device sends the configuration information of the first cell to the second network device after entering the energy-saving mode is used. To save more energy, the first network device may enter the second energy-saving sub-mode. In this case, the first network device may neither send the configuration information of the first cell to the second network device nor send the common information of the first cell to the terminal device, but send a signal of the second cell. It may also be considered that the first network device may replicate and send a signal of the second network device, so that coverage of the second network device can be enhanced. Because the first network device does not need to send the configuration information of the first cell to the second network device, the fourth indication information may not include the identification information or the address information of the second network device.

In embodiments of this application, some network devices in the system may send, at the lower frequency, the common information used by the terminal device to access the cell, send some of the common information used by the terminal device to access the cell, or even do not send the common information used by the terminal device to access the cell. The common information of the cells of the network devices may be sent by the another network device, so that the normal cell access of the terminal device is not affected.

Alternatively, for a plurality of cells of one network device, the network device may send common information of some of the plurality of cells at the lower frequency, send some of the common information of these cells, or even not send the common information of these cells. The common information of these cells is sent via another cell. Even if the network device saves energy, the normal cell access of the terminal device is not affected.

In embodiments provided in this application, the methods provided in embodiments of this application are separately described from perspectives of the network device, the terminal device, and interaction between the network device and the terminal device. To implement the functions of the methods provided in the foregoing embodiments of this application, both the network device and the terminal device in embodiments of this application may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on a specific application and a design constraint condition of the technical solutions.

With reference to the accompanying drawings, the following describes communication apparatuses, in embodiments of this application, configured to implement the foregoing methods.

FIG. 8 is a schematic block diagram of a communication apparatus 800 according to an embodiment of this application. The communication apparatus 800 may include a processing module 810 and a transceiver module 820. Optionally, a storage unit may be further included. The storage unit may be configured to store instructions (code or a program) and/or data. The processing module 810 and the transceiver module 820 may be coupled to the storage unit. For example, the processing module 810 may read the instructions (the code or the program) and/or the data in the storage unit, to implement a corresponding method. The foregoing modules may be disposed independently, or may be partially or completely integrated.

The communication apparatus 800 can accordingly implement behavior and a function of the terminal device, the network device, or the control node in the foregoing method embodiments. The communication apparatus 800 may be the first terminal device, the first network device, the second network device, or the control node in the foregoing method embodiments, may be a component (for example, a chip or a circuit) used in the first terminal device, the first network device, the second network device, or the control node, or may be a chip or a chip set in the first terminal device, the first network device, the second network device, or the control node, or a part that is of the chip and that is configured to perform a related method function.

In a possible implementation, the communication apparatus 800 can accordingly implement the behavior and the function of the first terminal device in the foregoing method embodiments.

In an example, the transceiver module 820 may be configured to receive first indication information from a first cell, where the first indication information indicates the communication apparatus 800 to perform cell selection or reselection, and the communication apparatus 800 camps on the first cell; and the processing module 810 is configured to perform cell selection or reselection based on the first indication information.

In an optional implementation, the transceiver module 820 is further configured to receive assistance information from the first cell, where the assistance information indicates at least one candidate cell, and the at least one candidate cell is for providing a camping service for the communication apparatus 800; and the processing module 810 is configured to perform cell selection or reselection based on the first indication information and the assistance information.

In an optional implementation, the first indication information is carried in a paging message, or the first indication information is carried on a physical downlink control channel for scheduling a paging message.

In an optional implementation, the assistance information is carried in a paging message, or the assistance information is carried in a broadcast message of the first cell.

In another example, the transceiver module 820 may be configured to receive first common information from a second cell, where the first common information includes system information of the second cell and configuration information of a first cell, and the communication apparatus 800 camps on the second cell; the processing module 810 is configured to perform cell measurement based on the first common information, and determine a target cell based on a measurement result, where the target cell is the second cell or the first cell; and the transceiver module 820 is further configured to initiate random access to the target cell.

In an optional implementation, the transceiver module 820 is further configured to: before the communication apparatus 800 camps on the second cell, receive notification information from the first cell, where the notification information indicates that system information of the first cell is changed; and receive updated system information from the first cell, where the updated system information includes a MIB, and does not include a SIB1; and the processing module 810 is specifically configured to perform cell selection or reselection based on the updated system information.

In an optional implementation, the transceiver module 820 is further configured to receive second indication information from the first cell, where the second indication information indicates at least one candidate cell, and the at least one candidate cell is for providing a camping service for the communication apparatus 800; and the processing module 810 is specifically configured to select or reselect to the second cell based on the updated system information and the second indication information, where the second cell belongs to the at least one candidate cell.

In an optional implementation, the configuration information of the first cell includes measurement configuration information, and the processing module 810 is specifically configured to perform cell measurement based on measurement configuration information corresponding to a beam of the second cell.

In an optional implementation, signal quality of the first cell is greater than or equal to signal quality of the second cell, and the target cell is the first cell; or signal quality of the first cell is greater than or equal to a first threshold, and the target cell is the first cell, where the first threshold is included in the configuration information of the first cell.

In an optional implementation, the first common information includes a first parameter, and the first parameter is for controlling a probability of accessing the second cell and a probability of accessing the first cell; and the processing module 810 is specifically configured to determine the target cell based on the first parameter, or determine the target cell based on the first parameter and a first threshold, where the first threshold is included in the configuration information of the first cell.

In a possible implementation, the communication apparatus 800 can accordingly implement the behavior and the function of the first network device in the foregoing method embodiments.

In an example, the processing module 810 is configured to determine first indication information; and the transceiver module 820 is configured to send the first indication information to a terminal device via a first cell, where the terminal device camps on the first cell of the communication apparatus 800, and the first indication information indicates the terminal device to perform cell selection or reselection.

In an optional implementation, the transceiver module 820 is further configured to send assistance information to the terminal device via the first cell, where the assistance information indicates at least one candidate cell, and the at least one candidate cell is for providing a camping service for the terminal device.

In an optional implementation, the first indication information is carried in a paging message, or the first indication information is carried on a physical downlink control channel for scheduling a paging message.

In an optional implementation, the assistance information is carried in a paging message, or the assistance information is carried in a broadcast message of the first cell.

In another example, the processing module 810 is configured to determine to enter an energy-saving mode; and the transceiver module 820 is configured to send configuration information of a first cell to a second network device.

In an optional implementation, the transceiver module 820 is further configured to send notification information to a terminal device, and sends updated system information of the first cell to the terminal device, where the notification information indicates that system information of the first cell is changed; and the updated system information of the first cell includes a MIB, and does not include a SIB1.

In an optional implementation, the transceiver module 820 is further configured to receive fourth indication information from a control node, where the fourth indication information includes one or more of the following configuration information: second mode indication information, a sending power of the first cell, a sending periodicity of the first cell, or second time information, where the second mode indication information indicates the first cell to use the one or more of the configuration information, and the second time information indicates start time for using the one or more of the configuration information by the first cell.

In an optional implementation, the updated system information of the first cell further includes identification information of a second cell of the second network device.

In an optional implementation, the transceiver module 820 is further configured to send first information to the control node, where the first information indicates service load and/or energy consumption of the communication apparatus 800 within first duration. For example, the first information includes one or more of the following information: a quantity of terminal devices connected to the communication apparatus 800 within the first duration; a proportion of an average air interface resource or a maximum air interface resource used by the communication apparatus 800 within the first duration; average power consumption or accumulated power consumption of the communication apparatus 800 within the first duration; or energy efficiency of the communication apparatus 800 within the first duration or energy consumed by the communication apparatus 800 to send the system information within the first duration.

In still another example, the transceiver module 820 is configured to receive fourth indication information from a control node, where the fourth indication information includes one or more of the following configuration information: second mode indication information, a sending power of a first cell, a sending periodicity of the first cell, or second time information, where the second mode indication information indicates the first cell to use the one or more of the configuration information, and the second time information indicates start time for using the one or more of the configuration information by the first cell. The processing module 810 is configured to determine, based on the fourth indication information, not to send common information of the first cell, or determine, based on the fourth indication information, to send a signal of a second cell, where the second cell is a cell of a second network device.

In an optional implementation, the transceiver module 820 is further configured to send notification information and updated system information of the first cell to a terminal device, where the notification information indicates that system information of the first cell is changed; and the updated system information of the first cell includes a MIB, and does not include a SIB 1.

In an optional implementation, the transceiver module 820 is further configured to send first information to the control node, where the first information indicates service load and/or energy consumption of the communication apparatus 800 within first duration. For example, the first information includes one or more of the following information: a quantity of terminal devices connected to the communication apparatus 800 within the first duration; a proportion of an average air interface resource or a maximum air interface resource used by the communication apparatus 800 within the first duration; average power consumption or accumulated power consumption of the communication apparatus 800 within the first duration; or energy efficiency of the communication apparatus 800 within the first duration or energy consumed by the communication apparatus 800 to send the system information within the first duration.

In a possible implementation, the communication apparatus 800 can accordingly implement the behavior and the function of the second network device in the foregoing method embodiments.

For example, the processing module 810 is configured to determine first common information, where the first common information includes system information of a second cell and configuration information of a first cell, the second cell is a cell served by the communication apparatus 800, and a terminal device camps on the second cell; and the transceiver module 820 is configured to send the first common information to the terminal device via the second cell.

In an optional implementation, the first cell is a cell of a first network device, and the transceiver module 820 is further configured to receive the configuration information of the first cell from the first network device.

In an optional implementation, the transceiver module 820 is further configured to receive third indication information from a control node, where the third indication information includes one or more of the following configuration information: first mode indication information, a sending power of the second cell, a sending periodicity of the second cell, or first time information, where the first mode indication information indicates the second cell to use the one or more of the configuration information, and the first time information indicates start time for using the one or more of the configuration information by the second cell.

In an optional implementation, the transceiver module 820 is further configured to send first information to the control node, where the first information indicates service load and/or energy consumption of the communication apparatus 800 within first duration. For example, the first information includes one or more of the following information: a quantity of terminal devices connected to the communication apparatus 800 within the first duration; a proportion of an average air interface resource or a maximum air interface resource used by the communication apparatus 800 within the first duration; average power consumption or accumulated power consumption of the communication apparatus 800 within the first duration; or energy efficiency of the communication apparatus 800 within the first duration or energy consumed by the communication apparatus 800 to send the system information within the first duration.

In a possible implementation, the communication apparatus 800 can accordingly implement the behavior and the function of the control node in the foregoing method embodiments.

For example, the processing module 810 is configured to generate third indication information and fourth indication information; and the transceiver module 820 is configured to send the third indication information and the fourth indication information to a second network device, where the third indication information includes one or more of the following configuration information: first mode indication information, a sending power of a second cell, a sending periodicity of the second cell, or first time information, where the first mode indication information indicates the second cell to use the one or more of the configuration information, the first time information indicates start time for using the one or more of the configuration information by the second cell, and the second cell is a cell of the second network device; and the fourth indication information includes one or more of the following configuration information: second mode indication information, a sending power of a first cell, a sending periodicity of the first cell, or second time information, where the second mode indication information indicates the first cell to use the one or more of the configuration information, the second time information indicates start time for using the one or more of the configuration information by the first cell, and the first cell is a cell of a first network device.

In an optional implementation, the transceiver module 820 is further configured to receive first information from the first network device, and receive first information from the second network device, where the first information from the first network device indicates service load and/or energy consumption of the first network device within first duration, and the first information from the second network device indicates service load and/or energy consumption of the second network device within the first duration. When the service load and/or the energy consumption of the first network device within the first duration are/is less than a first threshold, and the service load and/or the energy consumption of the second network device within the first duration are/is less than a second threshold, the control node determines to send the third indication information to the second network device, and determines to send the fourth indication information to the first network device.

It should be understood that, in this embodiment of this application, the processing module 810 may be implemented by a processor or a processor-related circuit component, and the transceiver module 820 may be implemented by a transceiver or a transceiver-related circuit component or a communication interface.

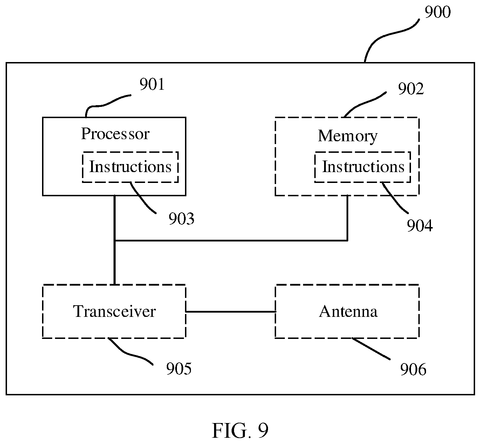

FIG. 9 is a schematic block diagram of a communication apparatus 900 according to an embodiment of this application. The communication apparatus 900 may be a terminal device, and can implement a function of the first terminal device in the methods provided in embodiments of this application. The communication apparatus 900 may alternatively be an apparatus that can support the first terminal device in implementing the corresponding function in the methods provided in embodiments of this application. The communication apparatus 900 may be a chip system. In this embodiment of this application, the chip system may consist of a chip, or may include the chip and another discrete device. For a specific function, refer to the descriptions in the foregoing method embodiments. The communication apparatus 900 may alternatively be a network device, and can implement a function of the first network device or the second network device in the methods provided in embodiments of this application. The communication apparatus 900 may alternatively be an apparatus that can support the first network device or the second network device in implementing the corresponding function in the methods provided in embodiments of this application. The communication apparatus 900 may be a chip system. In this embodiment of this application, the chip system may consist of a chip, or may include the chip and another discrete device. For a specific function, refer to the descriptions in the foregoing method embodiments. The communication apparatus 900 may alternatively be a control node, and can implement a function of the control node in the methods provided in embodiments of this application. The communication apparatus 900 may alternatively be an apparatus that can support the control node in implementing the corresponding function in the methods provided in embodiments of this application. The communication apparatus 900 may be a chip system. In this embodiment of this application, the chip system may consist of a chip, or may include the chip and another discrete device. For a specific function, refer to the descriptions in the foregoing method embodiments.

The communication apparatus 900 includes one or more processors 901, and may be configured to implement or support the communication apparatus 900 in implementing the function of the first terminal device, the first network device, the second network device, or the control node in the methods provided in embodiments of this application. For details, refer to the detailed descriptions in the method example. Details are not described herein. The processor 901 may also be referred to as a processing unit or a processing module, and may implement a specific control function. The processor 901 may be a general-purpose processor, a dedicated processor, or the like. For example, the processor 901 includes a central processing unit, an application processor, a modem processor, a graphics processor, an image signal processor, a digital signal processor, a video codec processor, a controller, a memory, a neural network processor, and/or the like. The central processing unit may be configured to control the communication apparatus 900, execute a software program, and/or process data. Different processors may be independent devices, or may be integrated into one or more processors, for example, integrated into one or more application-specific integrated circuits.

Optionally, the communication apparatus 900 includes one or more memories 902, configured to store instructions 904. The instructions may be run on the processor 901, so that the communication apparatus 900 performs the methods in the foregoing method embodiments. The memory 902 and the processor 901 may be separately disposed, or may be integrated together, or it may be considered that the memory 902 is coupled to the processor 901. Coupling in embodiments of this application may be indirect coupling or a communication connection between apparatuses, units, or modules, may be in an electrical form, a mechanical form, or another form, and is for information exchange between the apparatuses, the units, or the modules. The processor 901 may collaboratively operate with the memory 902. At least one of the at least one memory may be included in the processor. It should be noted that the memory 902 is not necessary, and therefore, is illustrated by using a dashed line in FIG. 9.

Optionally, the memory 902 may further store data. The processor and the memory may be separately disposed, or may be integrated together. In embodiments of this application, the memory 902 may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be for carrying or storing expected program code in a form of instructions or a data structure and that can be accessed by a computer, but is not limited thereto. The memory in embodiments of this application may alternatively be a circuit or any other apparatus that can implement a storage function, and is configured to store program instructions and/or data.

Optionally, the communication apparatus 900 may include instructions 903 (which may sometimes also be referred to as code or a program). The instructions 903 may be run on the processor, so that the communication apparatus 900 performs the methods in the foregoing embodiments. The processor 901 may store data.

Optionally, the communication apparatus 900 may further include a transceiver 905 and an antenna 906. The transceiver 905 may be referred to as a transceiver unit, a transceiver module, a transceiver, a transceiver circuit, an input/output interface, or the like, and is configured to implement a transceiver function of the communication apparatus 900 through the antenna 906.

The processor 901 and the transceiver 905 in this application may be implemented on an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus that implements the descriptions in this specification may be an independent device (for example, an independent integrated circuit or a mobile phone), or may be a part of a large device (for example, a module that may be embedded in another device). For details, refer to the foregoing descriptions of the terminal device and the network device. Details are not described herein again.

Optionally, the communication apparatus 900 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that in some embodiments, the communication apparatus 900 may include more or fewer components, some components are integrated, or some components are split. These components may be implemented by hardware, software, or a combination of the software and the hardware.

It should be noted that the communication apparatus in the foregoing embodiments may be the terminal device (or the network device), may be a circuit, or may be a chip used in the terminal device (or the network device), or another combined device, component, or the like that has a function of the terminal device (or the network device). When the communication apparatus is the terminal device or the network device, the transceiver module may be the transceiver, and may include an antenna, a radio frequency circuit, and the like; and the processing module may be the processor, for example, the central processing module (central processing unit, CPU). When the communication apparatus is the component that has the function of the terminal device or the network device, the transceiver module may be a radio frequency unit, and the processing module may be the processor. When the communication apparatus is the chip system, the communication apparatus may be a field programmable gate array (field programmable gate array, FPGA), an application-specific integrated circuit (application-specific integrated circuit, ASIC), a system-on-chip (system-on-chip, SoC), a CPU, a network processor (network processor, NP), a digital signal processing circuit (digital signal processor, DSP), a micro controller unit (micro controller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (the code instructions are stored in the memory, and may be directly read from the memory, or may be read from the memory via another device) and transmit the code instructions to the processor. The processor may be configured to run the code instructions to perform the methods in the foregoing method embodiments. For another example, the interface circuit may alternatively be a signal transmission interface circuit between a communication processor and the transceiver.

When the communication apparatus is a chip-type apparatus or a circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes at least one terminal device and at least one network device. For example, the communication system includes a terminal device and a network device that are configured to implement a related function in one or more of FIG. 4 to FIG. 6. For details, refer to the related descriptions in the foregoing method embodiments. Details are not described herein again. The communication system may further include a control node.

An embodiment of this application further provides a computer-readable storage medium, including instructions. When the instructions are run on a computer, the computer is enabled to perform the method performed by the first terminal device, the first network device, the second network device, or the control node in one or more of FIG. 4 to FIG. 6.

An embodiment of this application further provides a computer program product, including instructions. When the instructions are run on a computer, the computer is enabled to perform the method performed by the first terminal device, the first network device, the second network device, or the control node in one or more of FIG. 4 to FIG. 6.

An embodiment of this application provides a chip system. The chip system includes a processor, may further include a memory, and is configured to implement a function of the first terminal device, the first network device, the second network device, or the control node in the foregoing methods. The chip system may consist of a chip, or may include the chip and another discrete device.

It should be understood that, in various embodiments of this application, sequence numbers of the foregoing processes do not mean an execution sequence. The execution sequence of the processes should be determined based on functions and internal logic of the processes, and should not constitute any limitation on an implementation process of embodiments of this application.

A person of ordinary skill in the art may be aware that, with reference to various illustrative logical blocks (illustrative logical blocks) and steps (steps) described in embodiments disclosed in this specification, embodiments of this application can be implemented by electronic hardware or a combination of computer software and the electronic hardware. Whether the functions are performed by hardware or software depends on particular applications and design constraint conditions of the technical solutions. A person skilled in the art may use different methods to implement the functions for each particular application, but it should not be considered that the implementation goes beyond the scope of this application.

It may be clearly understood by a person skilled in the art that, for the purpose of convenient and brief description, for a specific working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions in this application essentially, the part that makes a contribution, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium, for example, a USB flash drive, a removable hard disk, a read-only memory (read-only memory, ROM), a RAM, a magnetic disk, or an optical disc, that can store program code.

It is clear that a person skilled in the art can make various modifications and variations to this application without departing from the scope of this application. This application is intended to cover these modifications and variations of this application provided that they fall within the scope of the claims of this application and their equivalent technologies.

## Claims

1. A communication method, comprising:
receiving, by a terminal device, first indication information from a first cell, wherein the first indication information indicates the terminal device to perform cell selection or reselection, and the terminal device camps on the first cell; and
performing, by the terminal device, cell selection or reselection based on the first indication information.

2. The method according to claim 1, wherein the method further comprises:
receiving, by the terminal device, assistance information from the first cell, wherein the assistance information indicates at least one candidate cell, and the at least one candidate cell is for providing a camping service for the terminal device; and
the performing, by the terminal device, cell selection or reselection based on the first indication information comprises:
selecting or reselecting to, by the terminal device, one of the at least one candidate cell based on the first indication information and the assistance information.

3. The method according to claim 1 or 2, wherein the first indication information is carried in a paging message, or the first indication information is carried on a physical downlink control channel for scheduling a paging message.

4. The method according to claim 2, wherein the assistance information is carried in a paging message, or the assistance information is carried in a broadcast message of the first cell.

5. A communication method, comprising:
determining, by a first network device, first indication information, wherein the first indication information indicates a terminal device to perform cell selection or reselection, and the terminal device camps on a first cell of the first network device; and
sending, by the first network device, the first indication information to the terminal device via the first cell.

6. The method according to claim 5, wherein the method further comprises:
sending, by the first network device, assistance information to the terminal device via the first cell, wherein the assistance information indicates at least one candidate cell, and the at least one candidate cell is for providing a camping service for the terminal device.

7. The method according to claim 5 or 6, wherein the first indication information is carried in a paging message, or the first indication information is carried on a physical downlink control channel for scheduling a paging message.

8. The method according to claim 6, wherein the assistance information is carried in a paging message, or the assistance information is carried in a broadcast message of the first cell.

9. A communication method, comprising:
receiving, by a terminal device, first common information from a second cell, wherein the first common information comprises system information of the second cell and configuration information of a first cell, and the terminal device camps on the second cell;
performing, by the terminal device, cell measurement based on the first common information, and determining a target cell based on a measurement result, wherein the target cell is the second cell or the first cell; and
initiating, by the terminal device, random access to the target cell.

10. The method according to claim 9, wherein the method further comprises:
before the terminal device camps on the second cell, receiving, by the terminal device, notification information from the first cell, wherein the notification information indicates that system information of the first cell is changed;
receiving, by the terminal device, updated system information from the first cell, wherein the updated system information comprises a master information block MIB, and does not comprise a system information block SIB1; and
performing, by the terminal device, cell selection or reselection based on the updated system information.

11. The method according to claim 10, wherein the method further comprises:
receiving, by the terminal device, second indication information from the first cell, wherein the second indication information indicates at least one candidate cell, and the at least one candidate cell is for providing a camping service for the terminal device; and
the performing, by the terminal device, cell selection or reselection based on the updated system information comprises:
selecting or reselecting to, by the terminal device, the second cell based on the updated system information and the second indication information, wherein the second cell belongs to the at least one candidate cell.

12. The method according to any one of claims 9 to 11, wherein the configuration information of the first cell comprises measurement configuration information, and the performing, by the terminal device, cell measurement based on the first common information comprises:
performing, by the terminal device, cell measurement based on measurement configuration information corresponding to a beam of the second cell.

13. The method according to any one of claims 9 to 12, wherein signal quality of the first cell is greater than or equal to signal quality of the second cell, and the target cell is the first cell; or
signal quality of the first cell is greater than or equal to a first threshold, and the target cell is the first cell, wherein the first threshold is comprised in the configuration information of the first cell.

14. The method according to any one of claims 9 to 12, wherein the first common information comprises a first parameter, and the first parameter is for controlling a probability of accessing the second cell and a probability of accessing the first cell; and the performing, by the terminal device, cell measurement based on the first common information, and determining a target cell based on a measurement result comprises:
determining, by the terminal device, the target cell based on the first parameter, or determining, by the terminal device, the target cell based on the first parameter and a first threshold, wherein the first threshold is comprised in the configuration information of the first cell.

15. A communication method, comprising:
determining, by a second network device, first common information, wherein the first common information comprises configuration information of a first cell and system information of a second cell, and the second cell is a cell of the second network device; and
sending, by the second network device, the first common information to a terminal device, wherein the terminal device camps on the second cell.

16. The method according to claim 15, wherein the first cell is a cell of a first network device, and the method further comprises:
receiving, by the second network device, the configuration information of the first cell from the first network device.

17. The method according to claim 16, wherein the method further comprises:
receiving, by the second network device, third indication information from a control node, wherein the third indication information comprises one or more of the following configuration information:
first mode indication information, a sending power of the second cell, a sending periodicity of the second cell, or first time information, wherein the first mode indication information indicates the second cell to use the one or more of the configuration information, and the first time information indicates start time for using the one or more of the configuration information by the second cell.

18. The method according to claim 17, wherein the method further comprises:
sending, by the second network device, first information to the control node, wherein the first information indicates service load and/or energy consumption of the second network device within first duration.

19. The method according to claim 18, wherein the first information comprises one or more of the following information:
a quantity of terminal devices connected to the second network device within the first duration;
a proportion of an average air interface resource or a maximum air interface resource used by the second network device within the first duration;
average power consumption or accumulated power consumption of the second network device within the first duration; or
energy efficiency of the second network device within the first duration or energy consumed by the second network device to send the system information within the first duration.

20. A communication apparatus, comprising a processing module and a transceiver module, wherein
the transceiver module is configured to receive first indication information from a first cell, wherein the first indication information indicates the communication apparatus to perform cell selection or reselection, and the communication apparatus camps on the first cell; and
the processing module is configured to perform cell selection or reselection based on the first indication information.

21. The apparatus according to claim 20, wherein the transceiver module is further configured to receive assistance information from the first cell, wherein the assistance information indicates at least one candidate cell, and the at least one candidate cell is for providing a camping service for the communication apparatus; and
the processing module is specifically configured to select or reselect to one of the at least one candidate cell based on the first indication information and the assistance information.

22. The apparatus according to claim 20 or 21, wherein the first indication information is carried in a paging message, or the first indication information is carried on a physical downlink control channel for scheduling a paging message.

23. The apparatus according to claim 21, wherein the assistance information is carried in a paging message, or the assistance information is carried in a broadcast message of the first cell.

24. A communication apparatus, comprising a processing module and a transceiver module, wherein
the processing module is configured to determine first indication information, wherein the first indication information indicates a terminal device to perform cell selection or reselection, and the terminal device camps on a first cell of the communication apparatus; and
the transceiver module is configured to send the first indication information to the terminal device via the first cell.

25. The apparatus according to claim 24, wherein the transceiver module is further configured to send assistance information to the terminal device via the first cell, wherein the assistance information indicates at least one candidate cell, and the at least one candidate cell is for providing a camping service for the terminal device.

26. The apparatus according to claim 24 or 25, wherein the first indication information is carried in a paging message, or the first indication information is carried on a physical downlink control channel for scheduling a paging message.

27. The apparatus according to claim 25, wherein the assistance information is carried in a paging message, or the assistance information is carried in a broadcast message of the first cell.

28. A communication apparatus, comprising a processing module and a transceiver module, wherein
the transceiver module is configured to receive first common information from a second cell, wherein the first common information comprises system information of the second cell and configuration information of a first cell, and the communication apparatus camps on the second cell;
the processing module is configured to perform cell measurement based on the first common information, and determine a target cell based on a measurement result, wherein the target cell is the second cell or the first cell; and
the transceiver module is further configured to initiate random access to the target cell.

29. The apparatus according to claim 28, wherein the transceiver module is further configured to: before the communication apparatus camps on the second cell, receive notification information from the first cell, wherein the notification information indicates that system information of the first cell is changed; and receive updated system information from the first cell, wherein the updated system information comprises a master information block MIB, and does not comprise a system information block SIB1; and
the processing module is configured to perform cell selection or reselection based on the updated system information.

30. The apparatus according to claim 29, wherein the transceiver module is further configured to receive second indication information from the first cell, wherein the second indication information indicates at least one candidate cell, and the at least one candidate cell is for providing a camping service for the communication apparatus; and
the processing module is specifically configured to select or reselect to the second cell based on the updated system information and the second indication information, wherein the second cell belongs to the at least one candidate cell.

31. The apparatus according to any one of claims 28 to 30, wherein the configuration information of the first cell comprises measurement configuration information, and the processing module is specifically configured to:
perform cell measurement based on measurement configuration information corresponding to a beam of the second cell.

32. The apparatus according to any one of claims 28 to 31, wherein signal quality of the first cell is greater than or equal to signal quality of the second cell, and the target cell is the first cell; or
signal quality of the first cell is greater than or equal to a first threshold, and the target cell is the first cell, wherein the first threshold is comprised in the configuration information of the first cell.

33. The apparatus according to any one of claims 28 to 31, wherein the first common information comprises a first parameter, and the first parameter is for controlling a probability of accessing the second cell and a probability of accessing the first cell; and the processing module is specifically configured to:
determine the target cell based on the first parameter, or determine the target cell based on the first parameter and a first threshold, wherein the first threshold is comprised in the configuration information of the first cell.

34. A communication apparatus, comprising a processing module and a transceiver module, wherein
the processing module is configured to determine first common information, wherein the first common information comprises configuration information of a first cell and system information of a second cell, and the second cell is a cell of the communication apparatus; and
the transceiver module is configured to send the first common information to a terminal device, wherein the terminal device camps on the second cell.

35. The apparatus according to claim 34, wherein the first cell is a cell of a first network device, and the transceiver module is further configured to receive the configuration information of the first cell from the first network device.

36. The apparatus according to claim 35, wherein the transceiver module is further configured to:
receive third indication information from a control node, wherein the third indication information comprises one or more of the following configuration information: first mode indication information, a sending power of the second cell, a sending periodicity of the second cell, or first time information, wherein the first mode indication information indicates the second cell to use the one or more of the configuration information, and the first time information indicates start time for using the one or more of the configuration information by the second cell.

37. The apparatus according to claim 36, wherein the transceiver module is further configured to send first information to the control node, wherein the first information indicates service load and/or energy consumption of the communication apparatus within first duration.

38. The apparatus according to claim 37, wherein the first information comprises one or more of the following information:
a quantity of terminal devices connected to the communication apparatus within the first duration;
a proportion of an average air interface resource or a maximum air interface resource used by the communication apparatus within the first duration;
average power consumption or accumulated power consumption of the communication apparatus within the first duration; or
energy efficiency of the communication apparatus within the first duration or energy consumed by the communication apparatus to send the system information within the first duration.

39. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 4, to enable the communication apparatus to perform the method according to any one of claims 5 to 8, to enable the communication apparatus to perform the method according to any one of claims 9 to 14, or to enable the communication apparatus to perform the method according to any one of claims 15 to 19.

40. A communication system, comprising a terminal device and a network device, wherein the terminal device is configured to implement the method according to any one of claims 1 to 4, and the network device is configured to implement the method according to any one of claims 5 to 8; or the terminal device is configured to implement the method according to any one of claims 9 to 14, and the network device is configured to implement the method according to any one of claims 15 to 19.

41. A computer-readable storage medium, wherein the computer-readable storage medium stores a computer program; and when the computer program is executed by a computer, the computer is enabled to perform the method according to any one of claims 1 to 4, the computer is enabled to perform the method according to any one of claims 5 to 8, the computer is enabled to perform the method according to any one of claims 9 to 14, or the computer is enabled to perform the method according to any one of claims 15 to 19.

42. A computer program product, wherein the computer program product stores a computer program; and when the computer program is executed by a computer, the computer is enabled to perform the method according to any one of claims 1 to 4, the computer is enabled to perform the method according to any one of claims 5 to 8, the computer is enabled to perform the method according to any one of claims 9 to 14, or the computer is enabled to perform the method according to any one of claims 15 to 19.
